# EUROPEAN PATENT SPECIFICATION

(11) **EP 3 012 162 B1**
(45) Date of publication and mention of the grant of the patent: **18.10.2017**
(21) Application number: 15190401.8
(22) Date of filing: 19.10.2015
(51) Int. Cl.: B60R 21/36

(54) **PEDESTRIAN PROTECTION AIRBAG DEVICE**
FUSSGÄNGER-AIRBAG-VORRICHTUNG
DISPOSITIF AIRBAG DE PROTECTION DES PIÉTONS

(30) Priority: 24.10.2014 JP 2014217641
(43) Date of publication of application: 27.04.2016
(73) Proprietor: Toyoda Gosei Co., Ltd., Kiyosu-shi Aichi 452-8564 (JP)
(72) Inventor: UMEYAMA, Takayuki, Kiyosu-shi, Aichi 452-8564 (JP); SUEMITSU, Taizo, Kiyosu-shi, Aichi 452-8564 (JP)
(74) Representative: Kramer Barske Schmidtchen Patentanwälte PartG mbB

(56) References cited:
- DE-A1-102005 041 274
- JP-A- 2007 153 062
- US-A1- 2014 291 055

## Description

### BACKGROUND OF THE INVENTION

### 1. FIELD OF THE INVENTION

The present invention relates to a pedestrian protection airbag device which deploys an airbag from a clearance between a rear end of a vehicle hood and a cowl toward the rear, left and right for protecting a pedestrian.

### 2. DESCRIPTION OF RELATED ART

As disclosed in JP2014-511305 A and JP2006-44322 A, a known pedestrian protection airbag device is mountable in a vicinity of the rear end of a vehicle hood. The airbag device includes an airbag which is stored in a storage area in a folded-up configuration and is inflatable with an inflation gas when actuated. The actuated airbag is designed to emerge out of the storage area and be deployed toward the rear, left and right through a clearance between the rear end of the vehicle hood and a cowl. The airbag as fully deployed includes a horizontal inflatable region which extends in a left and right direction for covering an upper surface of the cowl and a pair of vertical inflatable regions which extend rearward from vicinities of left and right ends of the horizontal inflatable region for covering upper surfaces (front surfaces) of the left and right front pillars.

However, in the conventional pedestrian protection airbag device disclosed in the above prior art documents, there was a problem that rear end regions of the left and right vertical inflatable regions are likely to oscillate in a left and right direction and cannot be deployed over the upper surfaces (front surfaces) of the left and right front pillars quickly. Further, US 2014/0291055 A1 relates to a pedestrian airbag apparatus according to the preamble of claim 1.

### SUMMARY OF THE INVENTION

The object of the present invention is to provide a pedestrian protection airbag device that is able to deploy its airbag over upper surfaces of the front pillars in a quick and adequate fashion.

The pedestrian protection airbag device of the invention is mountable on a vehicle and includes a housing and an airbag which is stored in the housing in a folded-up configuration. The airbag is inflatable with an inflation gas and is deployable toward the rear, left and right via a clearance formed between a rear end of a vehicle hood and a cowl for covering the cowl and left and right front pillars of the vehicle.

The airbag includes a horizontal inflatable portion that is deployable in such a manner as to extend in a left and right direction to cover an upper surface of the cowl and left and right vertical inflatable portions that are deployable in such a manner as to extend rearward from vicinities of left and right ends of the horizontal inflatable portion to cover upper surfaces of the front pillars.

A circumferential wall of the airbag is composed of a vehicle body facing wall deployable on a lower side and a pedestrian-facing wall deployable on an upper side, and the vehicle body facing wall and pedestrian-facing wall are continuous at outer peripheral edges thereof.

The horizontal inflatable portion includes: an in-hood inflatable portion that includes an inlet port for letting in an inflation gas and is deployable beneath the rear end of the hood; and an out-of-hood inflatable portion that is deployable in such a manner as to protrude rearward out of the rear end of the hood and is in gas communication with the vertical inflatable portions at vicinities of left and right ends of the out-of-hood inflatable portion.

The airbag further includes a band-shaped partitioning tether that is jointed to the vehicle body facing wall and pedestrian-facing wall by upper and lower edges of the partitioning tether and partitions an inflatable region of the airbag as fully inflated ranging from the out-of-hood inflatable portion to the left and right vertical inflatable portions into a rear end region and a front region. The rear end region is shaped along a rear edge of the airbag.

The front region and an inflatable region of the airbag disposed in front of the front region serve as a primary inflatable region and the rear end region serves as a secondary inflatable region that admits the inflation gas from the primary inflatable region and starts inflation after the primary inflatable region starts inflation. The partitioning tether is so disposed as to form supply ports via which the secondary inflatable region admits the inflation gas from the primary inflatable region only at vicinities of left and right ends of the partitioning tether.

When the airbag of the airbag device of the invention is fed with an inflation gas via the inlet ports at actuation of the airbag device, the airbag will unfold and emerge out of the housing and be deployed towards the rear, left and right via the clearance between the rear end of the hood and the cowl such that the in-hood inflatable portion of the horizontal inflatable portion is deployed on the underside of the rear end of the hood and the out-of-hood inflatable portion is deployed at the rear and on the left and right of the rear end of the hood to cover the upper surface of the cowl. The left and right vertical inflatable portions extending rearward from the left and right end regions of the out-of-hood inflatable portion will cover the upper (front) surfaces of the front pillars at completion of airbag deployment.

At airbag inflation, the inflation gas having flown into the airbag via the inlet port will firstly flow into the primary inflatable region disposed in front of the partitioning tether of the horizontal inflatable portion, and then flow towards the left and right along the partitioning tether. Subsequently, the gas flows into the secondary inflatable portion via the supply ports disposed in a vicinity of each of left and right ends of the partitioning tether. At this time, since the supply ports are disposed only at the vicinities of the left and right ends of the partitioning tether, the inflation gas in the primary inflatable region will flow towards the left and right along the partitioning tether after reaching the partitioning tether, such that the primary inflatable region disposed in front of the partitioning tether will inflate quickly as a whole. The primary inflatable region surrounds an outer circumference (front side) of the secondary inflatable region (rear end region) which is disposed along the rear edge of the airbag as fully inflated, and includes the out-of-hood inflatable portion of the horizontal inflatable portion and outer peripheral regions of the left and right vertical inflatable portions. That is, if the primary inflatable region is quickly inflated and reaches its fully inflated contour, the outer peripheral regions of the vertical inflatable portions extending rearward from the left and right end regions of the horizontal inflatable portion will also reach their fully inflated contour quickly, such that the vertical inflatable portions are deployed over the upper surfaces of the front pillars while being prevented from oscillating in a left and right direction at vicinities of the rear ends. Then the inflation gas will flow into the secondary inflatable region via the supply ports and inflate the secondary inflatable region into its fully inflated contour, and the primary inflatable region as well as the secondary inflatable region reach determined internal pressures, thus completing airbag deployment.

Therefore, the pedestrian protection airbag device of the invention is able to deploy the airbag over the upper surfaces of the front pillars in a quick and adequate fashion. It is needless to say that the airbag covers the upper surface of the cowl as well with the out-of-hood inflatable portion of the horizontal inflatable portion in an adequate fashion.

In the pedestrian protection airbag device of the invention, it is desired that the partitioning tether is disposed in a curved fashion like a generally arc protruding forward in a plan view of the airbag as fully inflated.

With this configuration, if an inflation gas reaches a vicinity of the partitioning tether in an initial stage of inflow of inflation gas into the airbag, the gas will flow smoothly towards left and right along the partitioning tether formed in a curved fashion like a generally arc up to vicinities of the left and right ends of the tether, and inflate the whole primary inflatable region disposed in front of the partitioning tether into a fully inflated state quickly. As described above, if the primary inflatable region is quickly inflated and reaches its fully inflated contour, the outer peripheral regions of the vertical inflatable portions will also reach their fully inflated contour quickly, such that the vertical inflatable portions will be deployed over the upper surfaces of the front pillars further quickly without oscillating in a left and right direction at vicinities of the rear ends.

It is also desired that flow paths of the inflation gas in the primary inflatable region narrow towards the left and right supply ports.

This configuration will provide narrow regions at vicinities of the supply ports in the primary inflatable region, where the inflation gas will stand before flowing into the secondary inflatable region. Accordingly, the primary inflatable region will be able to reach its fully inflated contour in a quick and steady fashion, and the left and right vertical inflatable portions will be further prevented from oscillating at the rear ends and be deployed over the upper surfaces of the front pillars in a quick and steady fashion.

It is also desired that the partitioning tether is composed of two base cloths, i.e., a vehicle body facing cloth jointed to the vehicle body facing wall and a pedestrian-facing cloth jointed to the pedestrian-facing wall, and that seam allowances that joints ends of the vehicle body facing cloth and the pedestrian-facing cloth together face towards the secondary inflatable region.

With no seam allowances facing towards the primary inflatable region, this configuration will not affect the flow of the inflation gas in front of the partitioning tether and help the gas to flow towards left and right smoothly to inflate the primary inflatable region up to the left and right ends smoothly.

This configuration will also facilitate an attaching work of the partitioning tether to the airbag. That is, if the partitioning tether is composed of the vehicle body facing cloth and the pedestrian-facing cloth, it is possible to join firstly second ends of the vehicle body facing cloth and pedestrian-facing cloth to the vehicle body facing wall and the pedestrian-facing wall, and then join first ends of the vehicle body facing cloth and pedestrian-facing cloth together before joining the outer peripheral edges of the vehicle body facing wall and the pedestrian-facing wall together to form the circumferential wall of the airbag. This way the partitioning tether will be easily formed inside the airbag.

In the pedestrian protection airbag device of the invention, the airbag desirably further includes between the inlet port and the partitioning tether in a central region in a left and right direction of the in-hood inflatable portion a front thickness regulating section that regulates a thickness of the in-hood inflatable portion at airbag deployment.

Such a front thickness regulating section will limit the thickness of the in-hood inflatable portion inflatable beneath the rear end of the hood, thus prevent the in-hood inflatable portion from getting hung up between the hood and cowl, and further enable the out-of-hood inflatable portion and vertical inflatable portions, which are on a lower reach of the inflation gas relative to the in-hood inflatable portion, to emerge out of the housing and deploy rearward smoothly.

In this instance, it is desired that the airbag additionally includes on each of the left and right sides of the front thickness regulating section a peripheral thickness regulating section that regulates the thickness of the in-hood inflatable portion at airbag deployment and that the peripheral thickness regulating sections are disposed in such a manner as to form communication ports between the front thickness regulating section and the peripheral thickness regulating sections and between each of the peripheral thickness regulating sections and the circumferential wall at left and right edges of the airbag for letting the inflation gas go rearward.

With this configuration, the peripheral thickness regulating sections together with the front thickness regulating section will limit the thickness of the in-hood inflatable portion over a generally entire area in a left and right direction without blocking the flow of the inflation gas towards the partitioning tether. Accordingly, the in-hood inflatable portion will be further prevented from getting hung up between the hood and cowl, and the out-of-hood inflatable portion and vertical inflatable portions will smoothly emerge out of the housing and be deployed.

In the pedestrian protection airbag device of the invention, it is further desired that the airbag includes at a vicinity of each of intersectional regions of the vertical inflatable portions and the out-of-hood inflatable portion of the horizontal inflatable portion a rear thickness regulating section that regulates a thickness of the airbag.

Such rear thickness regulating sections will limit the thicknesses of the intersectional regions of the vertical inflatable portions and out-of-hood inflatable portion at airbag deployment. That is, if the left and right ends of the partitioning tether are located in proximity to the rear edge of the airbag, wide inflatable regions will be formed in front of the ends of the partitioning tether. However, the rear thickness regulating sections will prevent those regions from inflating too thick. Therefore, the vertical inflatable portions will be deployed over the upper surfaces of the front pillars with an as uniform thickness as possible from vicinities of the front ends to the rear ends, and cushion a pedestrian adequately with an extensive plane surface.

### BRIEF DESCRIPTION OF DRAWINGS

Fig. 1 is a plan view of a vehicle equipped with a pedestrian protection airbag device embodying the invention;
Fig. 2 is a schematic vertical section of the vehicle of Fig. 1 taken along a front and rear direction at a vicinity of a hood lifting device;
Fig. 3 is a schematic enlarged plan view showing the way an airbag device of the embodiment is mounted;
Fig. 4 is a schematic exploded perspective view of the airbag device of the embodiment;
Fig. 5 is a schematic vertical section of the airbag device of the embodiment taken along a front and rear direction at a vicinity of an inflator;
Fig. 6 and Fig. 7 are a plan view of an airbag of the airbag device of the embodiment;
Fig. 8 is a sectional view of the airbag of Fig. 6 as inflated by itself, taken along line VIII-VIII of Fig. 6;
Fig. 9 is a sectional view of the airbag of Fig. 6 as inflated by itself, taken along line IX-IX of Fig. 6;
Fig. 10 is a sectional view of the airbag of Fig. 6 as inflated by itself, taken along line X-X of Fig. 6;
Fig. 11 shows base members (base cloths) of the airbag of Fig. 6 by plan views;
Fig. 12 is a schematic vertical section of the airbag device of the embodiment before operation, taken along a front and rear direction at a vicinity of a central region of the width of a vehicle;
Fig. 13 is a schematic vertical section of the airbag device of the embodiment at operation;
Fig. 14 is a schematic vertical section of the airbag device of the embodiment having completed deployment;
Fig. 15 is a schematic plan view of the airbag device of the embodiment at operation;
Fig. 16 is a schematic plan view of the airbag device of the embodiment having completed deployment;
Fig. 17 is a plan view of a modification of the airbag; and
Fig. 18 is a plan view of another modification of the airbag.

### DESCRIPTION OF PREFERRED EMBODIMENTS

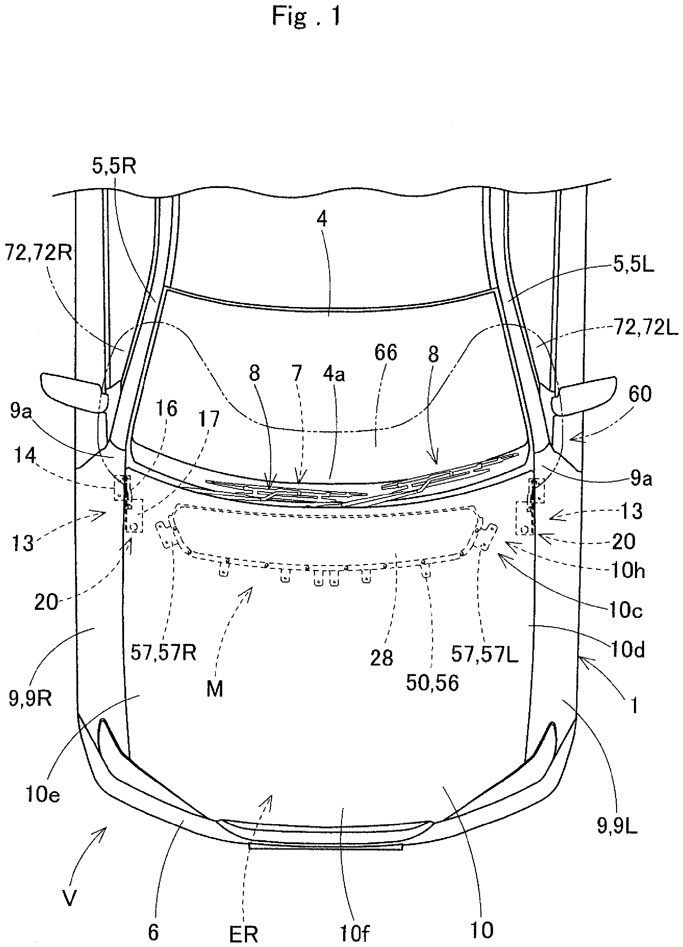

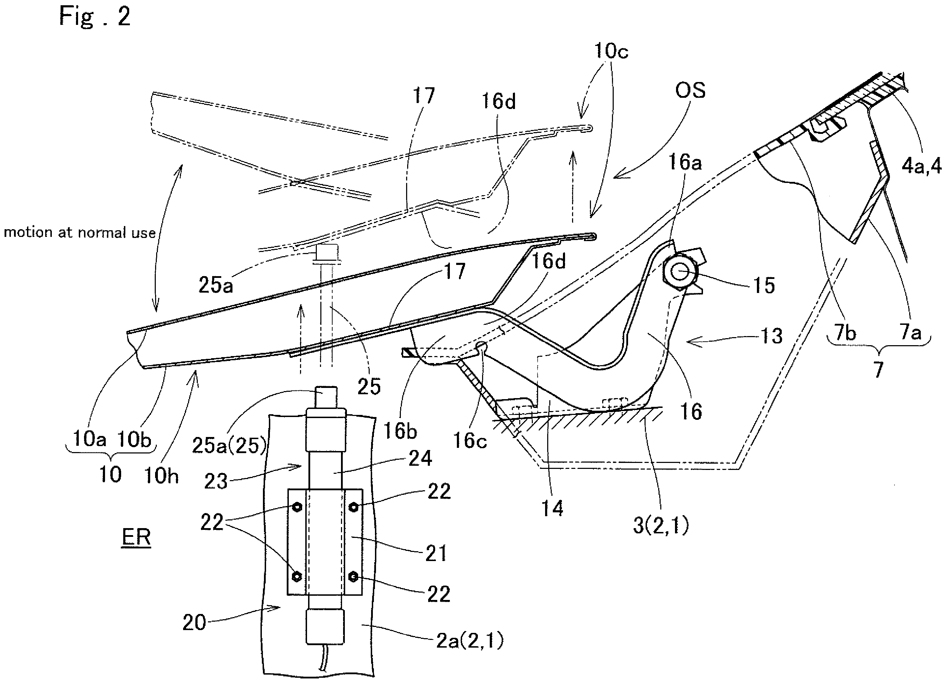

Preferred embodiments of the invention are now described referring to the accompanying drawings. As shown in Figs. 1, 3 and 5, a pedestrian protection airbag device M embodying the invention is located on an underside 10h of a vicinity of the rear end 10c of a vehicle hood 10, at a vicinity of the center in a left and right direction of a vehicle V between left and right front pillars 5 (5L and 5R). The airbag device M is designed to cooperate with hood lifting devices 20 (Fig. 2) that lift the rear end 10c of the hood 10.

Unless otherwise specified, front/rear, up/down and left/right directions in this specification are intended to refer to front/rear, up/down and left/right directions of the vehicle V.

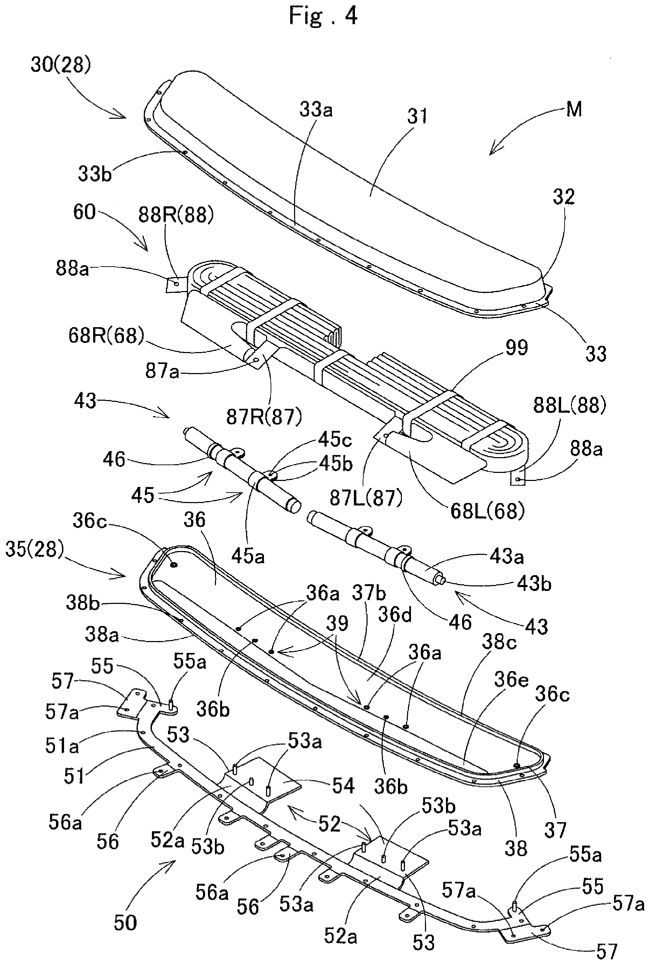

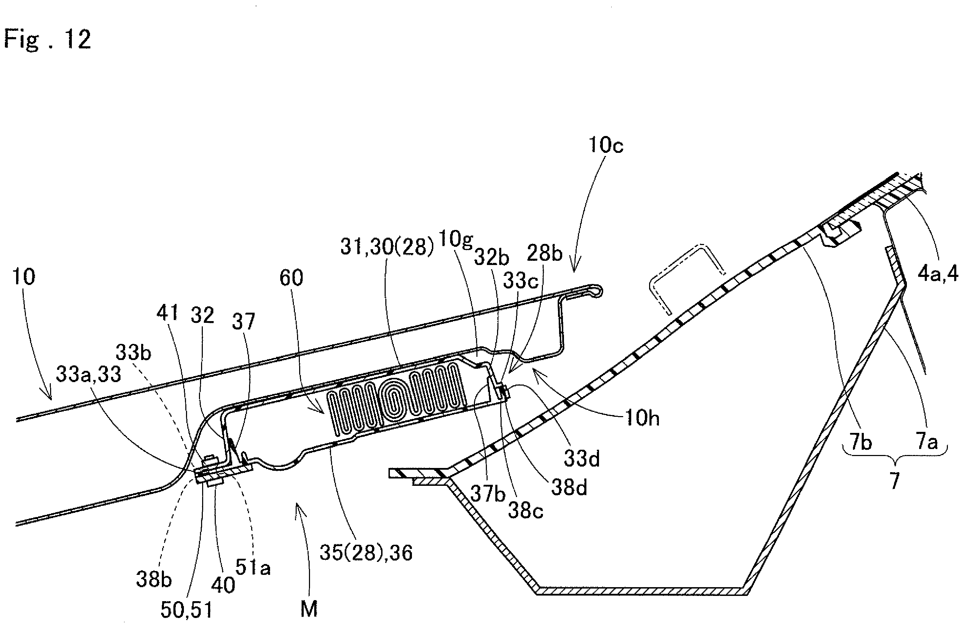

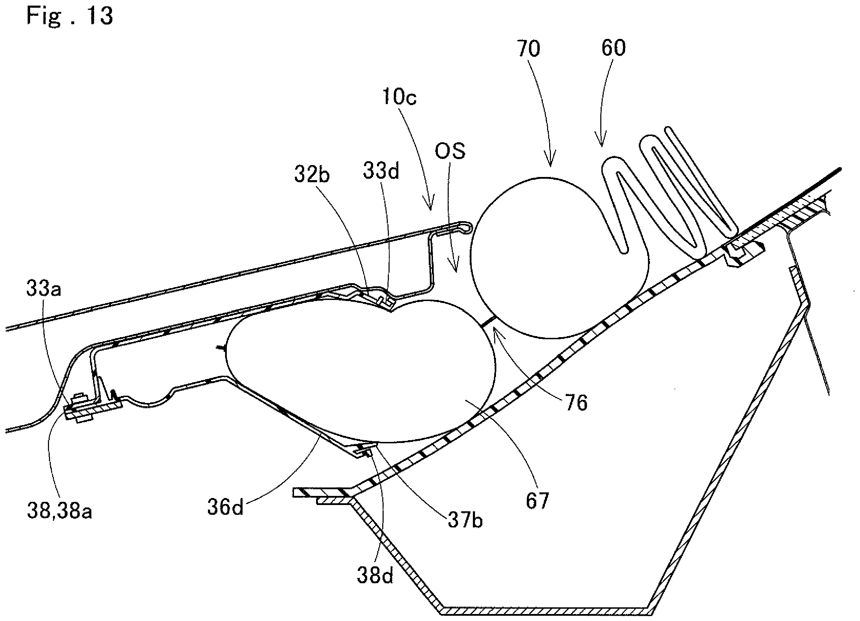

The vehicle V includes inside the front bumper 6 (Fig. 1) a not-shown sensor for detecting an impact against a pedestrian. A not-shown actuating circuit is designed to actuate an inflator 43 (Fig. 4) of the airbag device M in response to a signal fed from the sensor that has sensed an impact against a pedestrian. When an impact against a pedestrian is detected, the actuating circuit also actuate later-described actuators 23 of the hood lifting devices 20 (Fig. 2) generally simultaneously with the inflator 43 to lift the rear end 10c of the hood 10, as indicated with double-dotted lines in Fig. 2, in order that a clearance OS is formed between the rear end 10c of the hood 10 and a cowl 7 for allowing airbag emergence (Figs. 12 and 13).

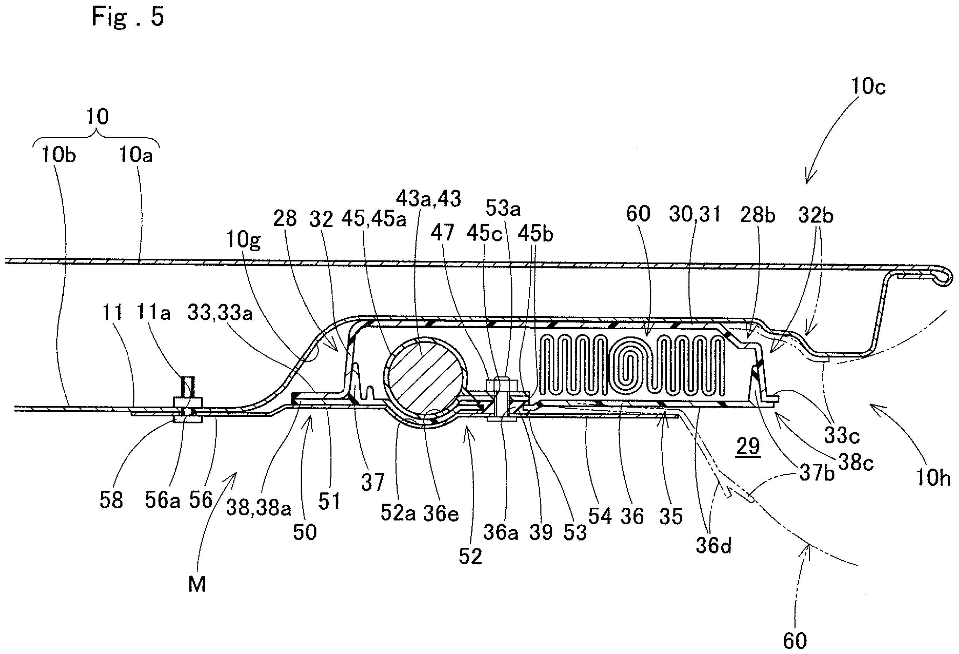

As shown in Fig. 1, the hood 10 covers an engine room ER of the vehicle V and is joined to the body structure 1 of the vehicle V with hinge sections 13 located at left edge 10d and right edge 10e of the rear end 10c so as to be openable forward. The hood 10 of the embodiment is fabricated of plate material or the like of steel or aluminum (aluminum alloy), and is composed of an outer panel 10a, which forms the top face, and an inner panel 10b, which forms the lower face and is greater in strength than the outer panel 10a, as shown in Fig. 2. As shown in Fig. 1, in order to fit the front windshield 4, the rear end 10c of the hood 10 is so designed in shape as to curve relative to a left and right direction such that the center in a left and right direction is located forward whereas left and right end regions are located rearward. As shown in Figs. 5 and 12, the hood 10 includes on the underside 10h of a central region in a left and right direction at the rear end 10c a recessed region 10g which dents upward for housing the airbag device M. In front of the recessed region 10g is a mounting seat 11 at which the airbag device M is mounted on the hood 10. The mounting seat 11 is provided with a plurality of mounting holes 11a each having a nut. Later-described mounting sections 56 and 57 (Figs. 1 and 4) of a support bracket 50 of the airbag device M are secured to the mounting seat 11 at the mounting holes 11a with bolts 58.

As shown in Figs. 2 and 12, at the rear of the hood 10 is a cowl 7 that is composed of a cowl panel 7a, which has high rigidity and belongs to the vehicle body structure 1, and a cowl louver 7b disposed above the cowl panel 7a and is fabricated of synthetic resin. The cowl louver 7b is continuous at the rear end with a lower region 4a of the front windshield 4. The cowl 7 is also shaped along the curvature of the rear end 10c of the hood 10 to curve relative to a left and right direction such that the center in a left and right direction is located forward whereas left and right end regions are located rearward. As shown in Fig. 1, a pair of wipers 8 are provided on the cowl 7. Front pillars 5 (5L and 5R) are located on the left and right of the front windshield 4, as shown in Fig. 1. In the illustrated embodiment, the lower edge region of the front windshield 4 is so shaped to curve relative to a left and right direction that the center in a left and right direction is located forward whereas the left and right end regions are located rearward. Although the hood 10 is pushed up at the rear end 10c as shown in Figs. 2 and 13 when the hood lifting devices 20 are actuated, the front end 10f of the hood 10 stays engaged with the vehicle body structure 1 at this time since a latch mechanism holds a normally-closing hood lock striker (not-shown) disposed at the front end 10f.

The hinge sections 13 are located at the left edge 10d and right edge 10e of the rear end 10c of the hood 10 (Figs. 1 and 2), each of which is provided with a hinge base 14 and a hinge arm 16 secured to the hood 10. Each of the hinge bases 14 is secured to a mounting flange 3 mounted on a hood ridge reinforcement 2, which is part of the vehicle body structure 1. As shown in Fig. 2, each of the hinge arms 16 is formed of an angle material of sheet metal shaped into a generally semicircular arc protruding downwardly. The root end 16a of the hinge arm 16 is rotatably joined to the hinge base 14 with the aid of a support shaft 15. As shown in Fig. 2, each of the hinge arms 16 includes on the leading end 16b facing away from the root end 16a a joint plate 17 which extends from the leading end 16b generally along the underside of the hood 10. The joint plate 17 is jointed to the underside of the rear end 10c of the hood 10 by welding or the like. As shown in Fig. 2, a generally round cavity 16c is formed on the lower edge in a vicinity of the leading end 16b of each of the hinge arms 16. The region around the cavity 16c serves as a plastic deformation portion 16d that is plastically deformable for allowing the rise of the rear end 10c of the hood 10 when piston rods 25 of the actuators 23 of the hood lifting devices 20 push up the rear end 10c of the hood 10 (double-dotted lines in Fig. 2). As shown in Fig. 2, the support shafts 15 are so arranged that their axial directions extend along a left and right direction of the vehicle V. As indicated by double-dotted lines in Fig. 2, the hood 10 opens forward around the support shafts 15 if the front end 10f of the hood 10 is lifted.

As shown in Figs. 1 and 2, the hood lifting devices 20 are located on the left and right of the airbag device M, below the hinge sections 13 and beneath the left edge 10d and rear edge 10e of the rear end 10c of the hood 10. Each of the hood lifting devices 20 includes an actuator 23 and a mounting bracket 21 for mounting the actuator 23 on the hood ridge reinforcement 2. The mounting bracket 21 has a generally U-shaped sectional shape for holding the actuator 23 and is bolt 22 secured to a mounting flange 2a provided on the hood ridge reinforcement 2. Each of the actuators 23 includes a not-shown gas generator as the driving force, a cylinder 24 held by the mounting bracket 21 and a piston rod 25 stored inside the cylinder 24 for upward deployment out of the cylinder 24. The gas generator is stored at the bottom of the cylinder 24. The actuator 23 is so designed as to launch a not-shown piston of the piston rod 25 with a gas that the gas generator generates. If the actuator 23 is actuated, the top 25a of the piston rod 25 is deployed upward and abuts against the underside of the joint plate 17 provided proximate the leading end 16b of the hinge arm 16 located on the underside of the rear end 10c of the hood 10. That is, the tops 25a of the piston rods 25 lift the rear end 10c of the hood 10 as shown in Figs. 2 and 13, thereby forming a clearance OS between the cowl 7 and the rear end 10c of the hood 10 for allowing airbag emergence.

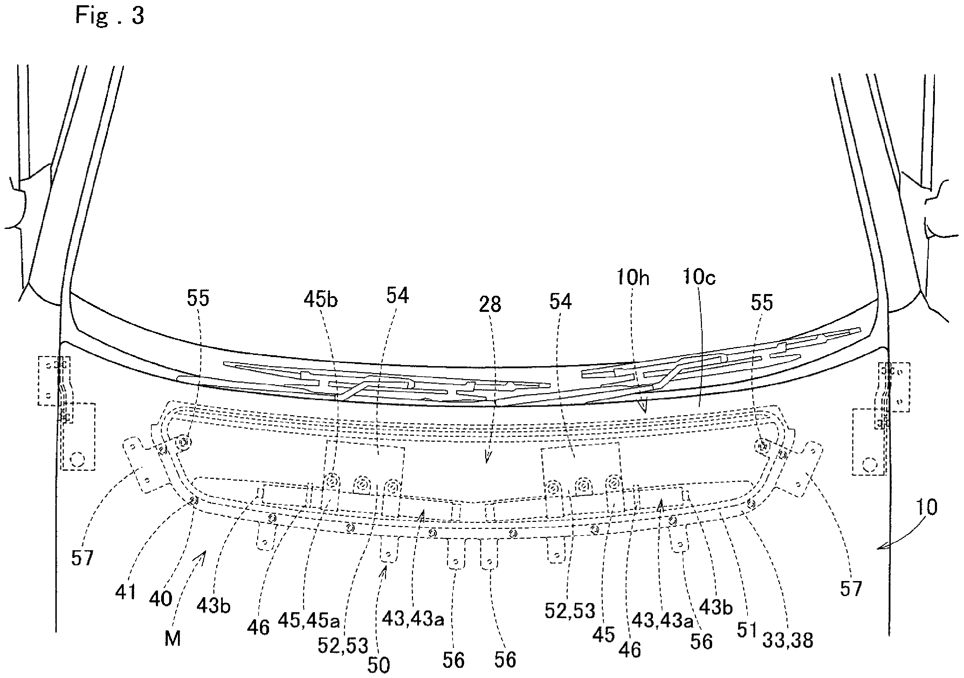

Referring to Figs. 3 to 5 and 12, the airbag device M includes an airbag 60, an inflator 43 that feeds an inflation gas to the airbag 60, a case 28 that houses the airbag 60 and inflator 43, and a support bracket 50 that supports the airbag 60 and the inflator 43 together with the case 28 and mounts the airbag device M on the mounting seat 11 of the hood 10.

The case 28 is fabricated from such synthetic resin as thermoplastic elastomer of polyolefin and serves as a housing of the airbag 60. The case 28 is formed into such a flat box that curves relative to a left and right direction such that the center in a left and right direction is located forward and has a generally identical thickness in an up and down direction to the depth of the recessed region 10g, in order to fit in the recessed region 10g formed at the rear end 10c of the hood 10. In the illustrated embodiment, the case 28 is composed of an upper case 30 disposed on the upper side and a lower case 35 disposed on the lower side.

The upper case 30 includes a ceiling wall 31 which forms the ceiling wall of the case 28, a circumferential wall 32 extending downward from the peripheral edge of the ceiling wall 31 and a flange 33 which extends outwardly from the lower end of the circumferential wall 32. The flange 33 includes at the rear region 33c a plurality of retaining holes 33d for retaining later-described retaining hooks 38d of the lower case 35. The lower case 35 includes a bottom wall 36 which is opposed to the ceiling wall 31 and forms the bottom wall of the case 28, a circumferential wall 37 extending upward from a vicinity of the outer peripheral edge of the bottom wall 36 and a flange 38 extending outwardly from the lower end of the circumferential wall 37. The circumferential wall 37 is close fitting with an inner circumferential plane of the circumferential wall 32 of the upper case 30 for better waterproofing property of the case 28. At the rear region 38c of the flange 38 of the lower case 35, there are formed a plurality of retaining hooks 38d (Figs. 12 and 13) extending upward and retained by the retaining holes 33d formed on the flange 33 of the upper case 30 in an disengageable fashion.

As best shown in Fig. 4, the bottom wall 36 of the lower case 35 is provided with a plurality of through holes 36a, 36b and 36c. Each of the through holes 36a receives a bolt 53a which secures the inflator 43 to the support bracket 50, each of the through holes 36b receives a bolt 53b which fixes a mounting belt 87 of the airbag 60 to a later-described mounting seat 53, and each of the through holes 36c receives a bolt 55a which mounts a mounting belt 88 of the airbag 60 to a later-described mounting seat 55. Each of the through holes 36a, 36b and 36c is provided with an annular packing 39 for securing waterproofing property (Fig. 5).

Further, the lower case 35 includes in a front region of the bottom wall 36 between a vicinity of the through holes 36a and 36b and the circumferential wall 37 a recessed storage region 36e for housing a body 43a of the inflator 43. The recessed storage region 36e is shaped to a half piped shape of the lower region of the inflator body 43a.

Moreover, the flange 33 of the upper case 30 and the flange 38 of the lower case 35 are provided, respectively, at the front edge 33a and 38a, with a plurality of mounting holes 33b/38b for receiving bolts 40. As the front edges 33a and 38a of the flanges 33 and 38 and a later-described horizontal bar section 51 of the support bracket 50 are made to abut one another, each of the bolts 40 is run through the mounting holes 33b, 38b and a through hole 51a of the horizontal bar section 51 of the support bracket 50 to be fastened with a nut 41 in order to mount the front edge 33a and 38a on the support bracket 50 (Figs. 4 and 12).

The upper case 30 and lower case 35 are assembled into the case 28 by engagement of the retaining hooks 38d and retaining holes 33d, fit of the circumferential walls 32 and 38, and joint between the front edges 33a and 38a of the flanges 33 and 38 and the horizontal bar section 51.

As shown in Fig. 5 (double-dotted lines), Figs. 12 and 13, at airbag deployment, the circumferential wall 37 of the lower case 35 is disengaged from the circumferential wall 32 of the upper case 30 at the rear region 28b of the case 28, and the rear region 36d of the bottom wall 36 of the lower case 35 bends downward while the rear region 37b of the circumferential wall 37 tilts downward, such that an opening 29 is formed. The airbag 60 emerges out of the opening 29 and is deployed rearward. When the opening 29 is formed, the rear region 32b of the circumferential wall 32 of the upper case 30 is also pushed and open upward.

In the illustrated embodiment, there are employed two inflators 43. Each of the inflators 43 is formed into a cylinder and includes a main body 43a with a great diameter and a small diameter section 43b with a smaller diameter. The small diameter section 43b protrudes out of the inflator body 43a and is provided with not-shown discharge ports each of which emits an inflation gas. The two inflators 43 are so arranged that the main bodies 43a are brought close to each other and the small diameter sections 43b face outwardly in a left and right direction, and are inserted into inlet ports 68 (68L and 68R) of the airbag 60. Each of the inflators 43 and inlet port 68L/68R of the airbag 60 are coupled together with a clamp 46 mounted around the inlet port 68. Two mounting brackets 45 are mounted around each of the inflators 43. Each of the mounting brackets 45 includes a band region 45a having a tubular shape and flanges 45b extending from both ends of the band region 45a. Each of the inflators 43 is placed on a later-described holding seat 52 of the support bracket 50 as is gripped by the band region 45a of the mounting bracket 45, while the flanges 45b of the mounting bracket 45 are placed on a later-described mounting seat 53 of the support bracket 50 such that bolts 53a of the mounting seat 53 run through mounting holes 45c of the flanges 45b. Nuts 47 are used to fasten the bolts 53, thus each of the inflators 43 is secured to the holding seat 52 of the support bracket 50 with the recessed storage region 36e of the case 28 interposed between itself and the support bracket 50 (Fig. 5).

The support bracket 50 is made of metal plate such as steel plate. The support bracket 50 includes a horizontal bar section 51 which extends in a left and right direction and is disposed beneath the front edges 33a and 38a of the flanges 33 and 38 of the case 28, and mounting tongues 56 and 57, the holding seats 52 and mounting seats 55 which extend outwardly or inwardly from the horizontal bar section 51.

The horizontal bar section 51 includes at positions corresponding to the mounting holes 33b and 38b formed on the front edges 33a and 38a of the flanges 33 and 38 of the case 28 a plurality of through holes 51a for receiving the bolts 40 that fasten the front edges 33a and 38a of the flanges 33 and 38 together.

The mounting tongues 56 and 57 are adapted to be mounted on the mounting seat 11 of the hood 10. The mounting tongues 56 are provided in plurality in such a manner as to extend forward from the horizontal bar section 51 and be disposed side by side in a left and right direction. Six mounting tongues 56 are provided in the illustrated embodiment. There are provided two of the mounting tongues 57 in such a manner as to extend outwardly in a left and right direction from vicinities of left and right edges of the horizontal bar section 51. Each of the mounting tongues 56 and 57 includes at the leading end a mounting hole 56a/57a running through an up and down direction for receiving a bolt 58 which is then inserted into a mounting hole 11a of the mounting seat 11 and fastened with a nut in order to mount the mounting tongue 56/57 on the mounting seat 11. By mounting the mounting tongues 56 and 57 on the mounting seat 11, the airbag device M is secured to the underside 10h of the rear end 10c of the hood 10, and is mounted on the vehicle V.

The two holding seats 52 are provided in order to support the two inflators 43, on the left and right of the central region of the horizontal bar section 51 in such a manner as to extend rearward. Each of the holding seats 52 includes a half-piped recessed storage region 52a for supporting the inflator body 43a from the outside of the bottom wall 36 of the case 28, a mounting seat 53 which adjoins the rear of the recessed storage region 52a and a guide section 54 which extends rearward from the mounting seat 53 in a generally rectangular plate shape.

The mounting brackets 45 holding the inflators 43 and later-described mounting belts 87 (87L and 87R) formed on the left and right of the central region of the airbag 60 are secured to the mounting seats 53. To this end, each of the mounting seats 53 includes at the left and right end regions the bolts 53a protruding upward and run through the mounting holes 45c of the flanges 45b of the mounting brackets 45. Between the bolts 53a is a bolt 53b protruding upward to be put through the mounting hole 87a of the mounting belt 87.

Each of the guide sections 54 prevents the airbag 60 from deploying downward in an initial stage of deployment and directs the airbag 60 to deploy rearward along the front windshield 4.

The mounting seats 55 are formed at positions corresponding to the mounting tongues 57 and at inside of the horizontal bar section 51. Later-described mounting belts 88 (88L and 88R) formed on the left and right of the airbag 60 are secured to the mounting seats 55. Each of the mounting seats 55 is provided with a bolt 55a protruding upward to run through the mounting hole 88a of the mounting belt 88.

As shown in Figs. 1, 6 to 11 and 16, the airbag 60 includes a horizontal inflatable portion 66 that is deployable in such a manner as to extend in a left and right direction to cover the upper surface of the cowl 7 (cowl louver 7b) and a pair of vertical inflatable portions 72 (72L and 72R) that is deployable in such a manner as to extend rearward from vicinities of left and right ends of the horizontal inflatable portion 66 and cover the upper surfaces (front surfaces) 5a of the left and right front pillars 5L and 5R. The circumferential wall 62 of the airbag 60 is composed of a vehicle body facing wall 63 deployable on the lower side and a pedestrian-facing wall 64 deployable on the upper side. The vehicle body facing wall 63 and pedestrian-facing wall 64 are identical in outer contour, and the airbag 60 is a planar airbag formed by jointing (sewing) outer peripheral edge of the walls 63 and 64 together.

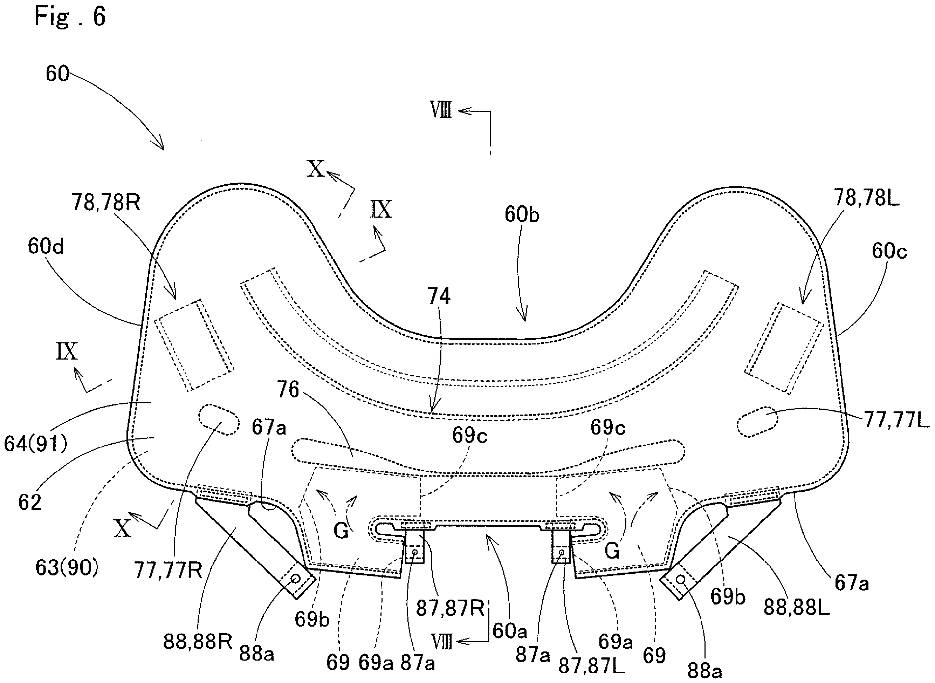

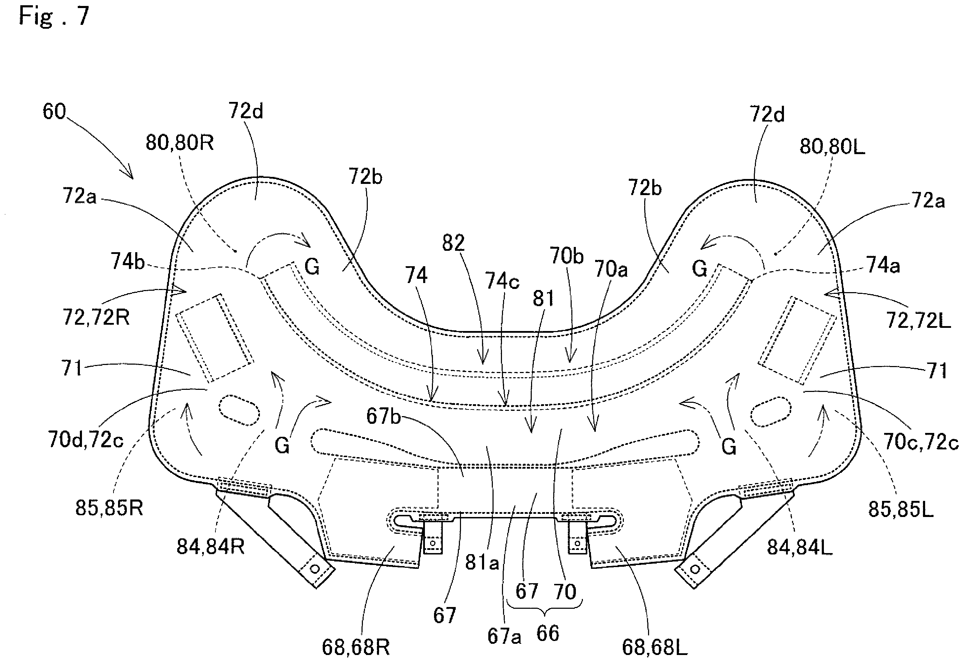

As shown in Figs. 6 and 7, the airbag 60 further include at the front edge 60a in the horizontal inflatable portion 66 a pair of inlet ports 68 (68L and 68R) coupled with the inflators 43 for admitting an inflation gas G from the inflators 43. The inlet ports 68L and 68R are opposed to each other in a left and right direction. Inside the inlet ports 68 are disposed inner tubes 69 (69L and 69R) which enhance heat resistance and redirect the inflation gas G toward the left and right smoothly. Each of the inner tubes 69 is trifurcate and includes an opening 69a facing toward the inflator 43, an opening 69b facing outwardly in a left and right direction of the airbag 60 and an opening 69c facing towards the center in a left and right direction of the airbag 60.

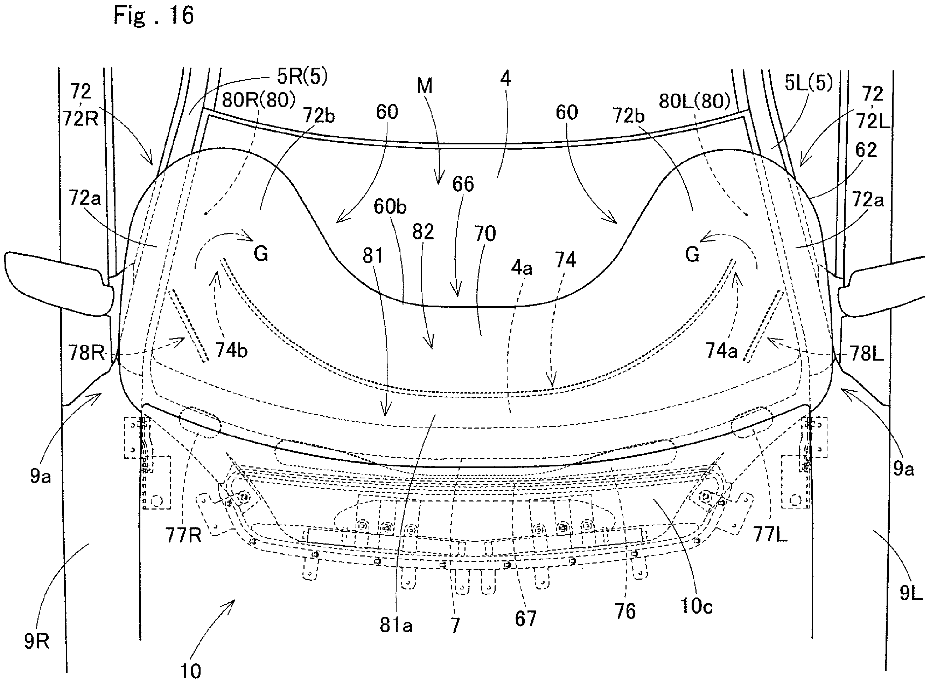

The horizontal inflatable portion 66 includes an in-hood inflatable portion 67 having the inlet ports 68L and 68R and an out-of-hood inflatable portion 70. At full deployment of the horizontal inflatable portion 66, the in-hood inflatable portion 67 stays beneath the rear end 10c of the hood 10 and is hidden behind the hood 10 while the out-of-hood inflatable portion 70 protrudes rearward out of the rear end 10c of the hood 10. That is, at airbag deployment, the out-of-hood inflatable portion 70 covers the upper surfaces of the cowl 7 and a lower region 4a of the front windshield 4 as well as of vicinities of rear ends 9a of left and right fender panels 9 (9L and 9R) as shown in Figs. 1 and 16. Further, the out-of-hood inflatable portion 70 are in gas communication with the left and right vertical inflatable portions 72L and 72R at vicinities of the left and right ends 70c and 70d.

Mounting belts 87 (87L and 87R) are coupled (sewn) to vicinities of the inlet ports 68L and 68R in the front edge 67a of the in-hood inflatable portion 67 to be secured to the mounting seats 53 of the support bracket 50 for preventing the airbag 60 from moving rearward at and after deployment. Each of the mounting belts 87 is provided with a mounting hole 87a for receiving the bolt 53b of the mounting seat 53. Moreover, mounting belts 88 (88L and 88R) are coupled (sewn) to intermediate positions between the inlet ports 68L and 68R and left and right edges 60c and 60d of the airbag 60 in the front edge 67a of the in-hood inflatable portion 67 to be secured to the mounting seats 55 of the support bracket 50 for preventing the airbag 60 from moving rearward at and after deployment. Each of the mounting belts 88 is provided with a mounting hole 88a for receiving the bolt 55a of the mounting seat 55.

The airbag 60 further includes a partitioning tether 74 that partitions an inflatable region of the airbag 60 as fully inflated ranging from the out-of-hood inflatable portion 70 to the left and right vertical inflatable portions 72L and 72R into two, i.e., into a rear end region 82 and a front region 81a. The partitioning tether 74 is formed into a band and jointed (sewn) to the vehicle body facing wall 63 and pedestrian-facing wall 64 by upper and lower edges. In a plan view of the airbag 60 as fully inflated, the partitioning tether 74 is disposed in a curved fashion like a generally arc protruding forward such that the rear end region 82 is disposed along the rear edge 60b of the airbag 60. In other words, a vicinity of the center 74c in a left and right direction of the curved line of the partitioning tether 74 is an arc with a small curvature (with a great curvature radius) or a generally straight line extending in a left and right direction, while each of left and right end regions 74a and 74b continues from the central region 74c gently with no corners with a great curvature (with a small curvature radius) and forms a gentle curved line curving rearward.

The partitioning tether 74 provides between the left and right ends 74a and 74b and the circumferential wall 62 of the airbag 60 supply ports 80 (80L and 80R) that feed an inflation gas G to an inflatable region disposed at the rear of the partitioning tether 74. That is, the inflatable region disposed at the rear of the partitioning tether 74 admit the inflation gas G only via the supply ports 80L and 80R. Accordingly, the front region 81a formed as a result of partitioning by the partitioning tether 74 and an inflatable region disposed in front of the front region 81a serve as a primary inflatable region 81 while the rear end region 82 serves as a secondary inflatable region 82 that admits an inflation gas G from the primary inflatable region 81 and starts inflation after the primary inflatable region 81 does so.

In the illustrated embodiment, the secondary inflatable region 82 is composed of a rear region 70b of the out-of-hood inflatable portion 70 of the horizontal inflatable portion 66 disposed at the rear of the partitioning tether 74 and inner regions 72b of the vertical inflatable portions 72L and 72R disposed on the inner side relative to the partitioning tether 74. The primary inflatable region 81 is composed of outer peripheral regions 72a of the vertical inflatable portions 72L and 72R disposed near left and right edges 60c and 60d of the airbag 60, the in-hood inflatable portion 67 of the horizontal inflatable portion 66 and a front region 70a of the out-of-hood inflatable portion 70 disposed in front of the partitioning tether 74.

The partitioning tether 74 is disposed in such a curved fashion that the left and right end regions 74a and 74b come close to the rear edge 60b of the airbag 60 while coming close to the left and right edges 60c and 60d. Accordingly, the flow paths of the inflation gas G in the primary inflatable region 81 narrow towards the left and right supply ports 80L and 80R.

As shown in Fig. 7, each of the left and right ends 74a and 74b of the partitioning tether 74 is located in a vicinity of the center of a width in a left and right direction of the rear end region 72d of the vertical inflatable portion 72L/72R.

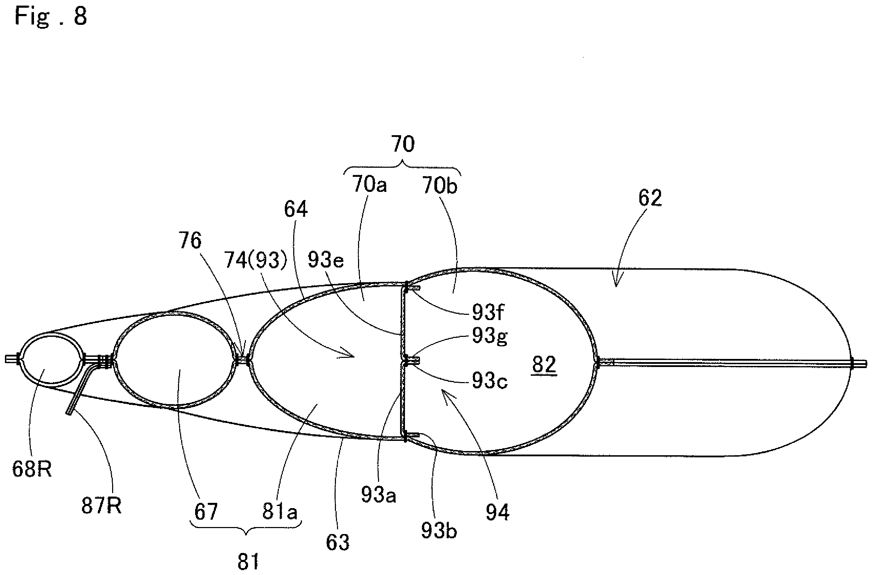

As shown in Fig. 8, the partitioning tether 74 is composed of two base cloths 93, i.e., a vehicle body facing cloth 93a jointed (sewn) to the vehicle body facing wall 63 and a pedestrian-facing cloth 93e jointed (sewn) to the pedestrian-facing wall 64. The vehicle body facing cloth 93a and pedestrian-facing cloth 93e are sewn together by their first ends 93c and 93g facing away from their second ends 93b and 93f sewn to the vehicle body facing wall 63 and pedestrian-facing wall 64. The seam allowances 94 of the first ends 93c and 93g face towards the secondary inflatable region 82.

The airbag 60 further includes between the inlet ports 68 and the partitioning tether 74 in a central region in a left and right direction of the in-hood inflatable portion 67 a front thickness regulating section 76 that regulates the thickness of the in-hood inflatable portion 67 at airbag deployment. The front thickness regulating section 76 is composed of a seam that sews together the vehicle body facing wall 63 and pedestrian-facing wall 64 which are in direct contact with each other. The front thickness regulating section 76 is disposed in a vicinity of the rear edge 67b (Fig. 7) of the in-hood inflatable portion 67 in such a manner as to cover the areas at the rear of the inlet port 68L and 68R and extends in a left and right direction in such a manner as to be orthogonal to an inflation gas G flowing rearward into the horizontal inflatable portion 66 via the inlet port 68L/68R.

The airbag 60 further includes on the left and right sides of the front thickness regulating section 76 peripheral thickness regulating sections 77 (77L, 77R) that regulate the thickness of the in-hood inflatable portion 67 at airbag deployment. Each of the peripheral thickness regulating sections 77L and 77R is composed of a seam that sews together the vehicle body facing wall 63 and pedestrian-facing wall 64 which are in direct contact with each other. As shown in Fig. 8, the peripheral thickness regulating sections 77L and 77R are disposed in such a manner as to form communication ports 84 (84L and 84R) between the front thickness regulating section 76 and the peripheral thickness regulating sections 77L and 77R and to form communication ports 85 (85L and 85R) between the peripheral thickness regulating sections 77L and 77R and the circumferential wall 62 at the left and right edges 60c/60d of the airbag 60 such that the communication ports 84 and 85 let an inflation gas G go rearward. Moreover, the peripheral thickness regulating sections 77L and 77R are so formed as to extend along the front edge 67a of the in-hood inflatable portion 67 and are disposed side by side in a left and right direction with the front thickness regulating section 76 in front of the left and right ends 74a and 74b of the partitioning tether 74. Accordingly, the communication ports 84 (84L and 84R) are disposed towards the center in a left and right direction of the airbag 60 relative to the ends 74a and 74b of the partitioning tether 74, and help direct the inflation gas G towards the curved partitioning tether 74.

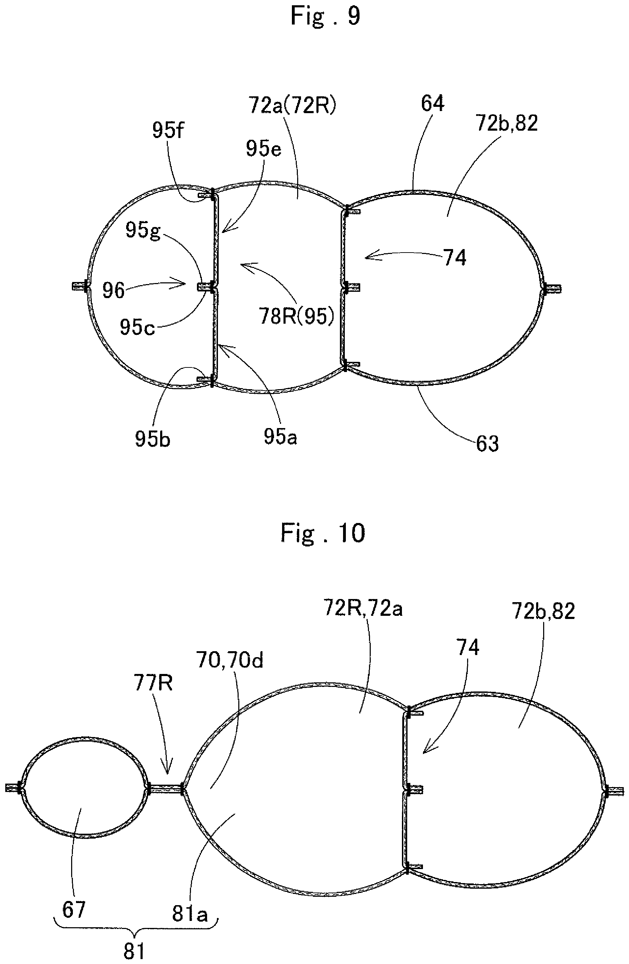

The airbag 60 further includes a rear thickness regulating section 78 (78L/78R) at a vicinity of each of intersectional regions 71 of the vertical inflatable portions 72L and 72R and out-of-hood inflatable portion 70 of the horizontal inflatable portion 66. As shown in Fig. 9, each of the rear thickness regulating sections 78 is composed of two base cloths 95, i.e., a vehicle body facing cloth 95a jointed (sewn) to the vehicle body facing wall 63 and a pedestrian-facing cloth 95e jointed (sewn) to the pedestrian-facing wall 64. The vehicle body facing cloth 95a and pedestrian-facing cloth 95e are sewn together by their first ends 95c and 95g facing away from their second ends 95b and 95f sewn to the vehicle body facing wall 63 and pedestrian-facing wall 64. The seam allowances 96 of the first ends 95c and 95g face away from the partitioning tether 74. Each of the rear thickness regulating sections 78 is so disposed that its band-shaped plane (its flat plane connecting the vehicle body facing wall 63 and pedestrian-facing wall 64 of the airbag 60 as deployed) passes a vicinity of the center between the partitioning tether 74 and peripheral thickness regulating section 77, and is so disposed as to be directed outwardly in a left and right direction towards the rear.

As shown in Fig. 9, a clearance between the vehicle body facing wall 63 and pedestrian-facing wall 64 at airbag deployment at the partitioning tether 74 is slightly smaller than a clearance between the vehicle body facing wall 63 and pedestrian-facing wall 64 at airbag deployment at each of the rear thickness regulating sections 78.

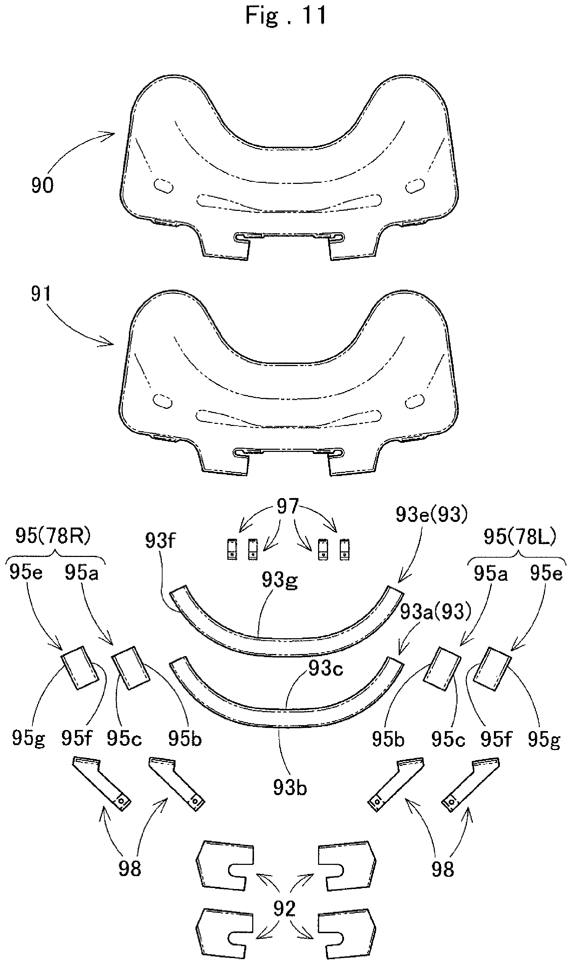

As shown in Fig. 11, the airbag 60 is composed of a vehicle body facing base cloth 90 for forming the vehicle body facing wall 63, a pedestrian-facing base cloth 91 for forming the pedestrian-facing wall 64, inner tube base cloths 92 for forming the inner tubes 69L and 69R, base cloths 93 for forming the partitioning tether 74, base cloths 95 for forming the rear thickness regulating sections 78L and 78R, and base cloths 97 and 98 for forming the mounting belts 87L, 87R, 88L and 88R. These base cloths (base members) are formed of a woven fabric of polyester yarns, polyamide yarns or the like coated by a coating agent for preventing gas leakage.

The vehicle body facing cloths 93a and 95a of the base cloths 93 and 95 are sewn to predetermined locations on the vehicle body facing base cloth 90 by the second ends 93b and 95b, while the pedestrian-facing cloths 93e and 95e of the base cloths 93 and 95 are sewn to predetermined locations on the pedestrian-facing base cloth 91 by the second ends 93f and 95f. Then the vehicle body facing cloth 93a and pedestrian-facing cloth 93e of the base cloths 93 are sewn together by the first ends 93c and 93g while each of the vehicle body facing cloths 95a and each of the pedestrian-facing cloths 95e are sewn together by the first ends 95c and 95g. The inner tube base cloths 92 are formed into the inner tubes 69L and 69R and the inner tubes 69L and 69R are placed on the inlet ports 68L and 68R. Then the vehicle body facing base cloth 90 and the pedestrian-facing base cloth 91 are sewn together by the outer peripheral edges as well as at the locations of the front thickness regulating section 76 and peripheral thickness regulating sections 77L and 77R. Thus the front thickness regulating section 76 and peripheral thickness regulating sections 77L and 77R are formed. The base cloths 97 and 98 are placed at predetermined locations on the outer peripheral edges of the vehicle body facing base cloth 90 and the pedestrian-facing base cloth 91 in an overlapping fashion and formed into the mounting belts 87L, 87R, 88L and 88R by sewing. Thus the airbag 60 is completed.

Mounting of the airbag device M on the vehicle V is now described. Firstly, the airbag 60 is folded up from a flattened state for storage in the case 28, as follows: Firstly, the vertical inflatable portions 72L and 72R are rolled towards the vehicle body facing wall 63 from the rear ends 72d. When the rolled regions come close to the horizontal inflatable portion 66, front regions of the vertical inflatable portions 72L and 72R and horizontal inflatable portion 66 are folded on creases extending in a left and right direction in a bellows fashion in such a manner as to be brought close to the front edge 60a of the airbag 60. Then the left and right edges 60c and 60b of the airbag 60 are folded back towards the center in a left and right direction of the airbag 60 on creases at joint regions of the mounting belts 88, thus completing the folding of the airbag 60. When the folding is completed, bands 99 are wrapped around the airbag 60 for keeping the folded-up configuration such that the opening ends of the inlet ports 68L and 68R are free, as shown in Fig. 4. Thereafter, the mounting brackets 45 are attached to the inflators 43 and the small diameter sections 43b of the inflators 43 are inserted into and jointed with the inlet ports 68L and 68R of the airbag 60 with the clamps 46. Then the lower case 35 is placed on the support bracket 50 and the inflators 43 and airbag 60 are located at predetermined positions of the bottom wall 36 of the lower case 35. More specifically, the recessed storage region 36e of the bottom wall 36 of the lower case 35 is placed on the recessed storage regions 52a of the left and right holding seats 52 of the support bracket 50, and the inflator bodies 43a are stored in the recessed storage region 36e such that the bolts 53a of the support bracket 50 run through the through holes 36a of the lower case 35 and mounting holes 45c of the mounting brackets 45, the bolts 53b of the support bracket 50 run through the through holes 36b of the lower case 35 and mounting holes 87a of the mounting belts 87 of the airbag 60, and the bolts 55a of the support bracket 50 run through the though holes 36c of the lower case 35 and the mounting holes 88a of the mounting belts 88 of the airbag 60. Then the nuts 47 are used to fasten the bolts 53a, 53b and 55a such that the inflators 43 and mounting belts 87 of the airbag 60 are secured to the holding seats 52 of the support bracket 50 and the mounting belts 88 of the airbag 60 are secured to the mounting seats 55 of the support bracket 50, both with interposition of the lower case 35.

Subsequently, the upper case 30 and lower case 35 are assembled together such that the retaining hooks 38d are engaged with the retaining holes 33d and the circumferential walls 32 and 27 fit together. Thus the case 28 is formed. Then the bolts 40 are inserted through the through holes 51a of the support bracket 50 and mounting holes 33b and 38b formed on the front edges 33a and 38a of the flanges 33 and 38 of the upper case 30 and lower case 35, and fastened with nuts 41. Thus the case 28 is secured to the support bracket 50 and the airbag device M is completed. Lead wires extending from the inflators 43 are taken out of the case 28 via not-shown through holes of the case 28 having water-tightness.

The lead wires are then connected to a control circuit of the vehicle V while the mounting tongues 56 and 57 of the support bracket 50 are placed on the mounting seat 11 of the vehicle hood 10. If then the bolts 58 are inserted into the mounting holes 56a, 57a and mounting holes 11a of the mounting seat 11 and fastened thereat, the airbag device M is mounted on the hood 10 and mounted on the vehicle V.

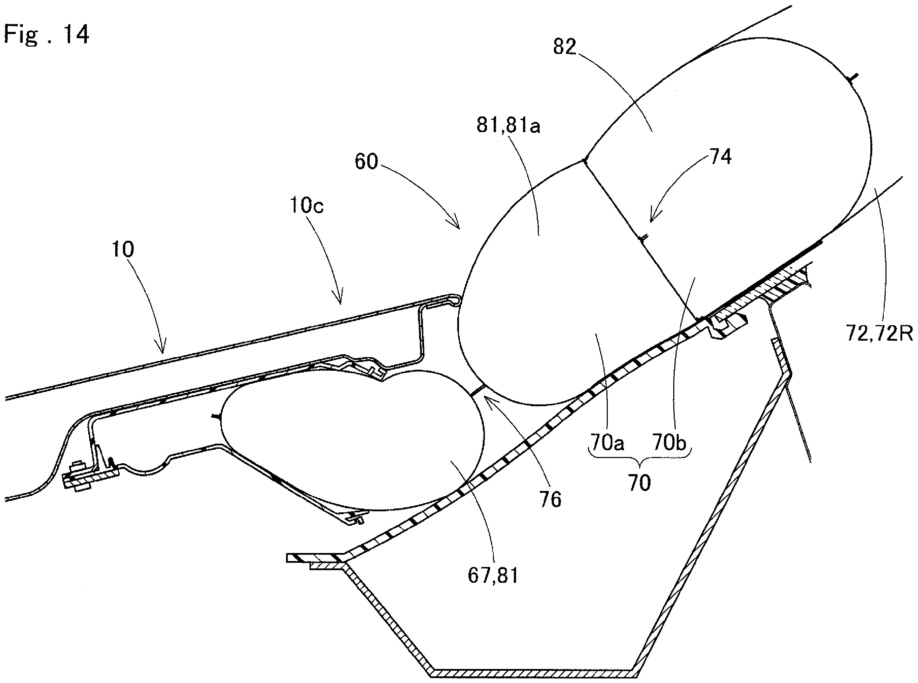

With the airbag device M of the illustrated embodiment, when the control circuit detects an impact against a pedestrian based on a signal fed from the sensor mounted on the front bumper 6, the actuators 23 of the hood lifting devices 20 will be actuated so the piston rods 25 push up the rear end 10c of the hood 10 as indicated by double-dotted lines in Fig. 2, such that a clearance OS is formed between the rear end 10c of the hood 10 and the cowl 7 for allowing airbag emergence. Generally simultaneously, the inflators 43 will be actuated and inflate the airbag 60, and the airbag 60 will push and open the rear regions 32b and 37b of the circumferential walls 32 and 37 of the case 28 as well as push the rear region 36d of the bottom wall 36 downward to open, thus forming an emergence opening 29 as shown in Figs. 5 and 12 to 14. The airbag 60 will then emerge out of the emergence opening 29 and be deployed rearward.

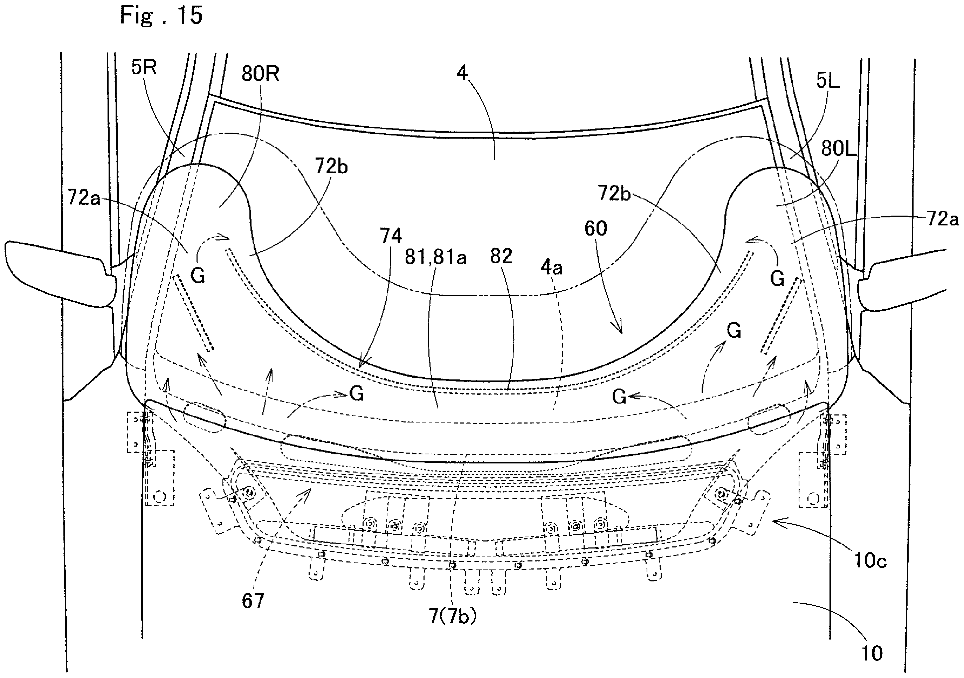

That is, when the airbag 60 is fed with an inflation gas G via the inlet ports 68L and 68R at actuation of the airbag device M, the airbag 60 will unfold and emerge out of the opening 29 of the case or housing 28 as well as the clearance OS between the rear end 10c of the hood 10 and the cowl 7, and be deployed towards rear, left and right as shown in Figs. 15 and 16 such that the in-hood inflatable portion 67 of the horizontal inflatable portion 66 is located on the underside 10h of the rear end 10c of the hood 10 and the out-of-hood inflatable portion 70 is deployed at the rear and on the left and right of the rear end 10c of the hood 10 to cover the upper surfaces of the cowl 7 and fender panels 9L and 9R. The left and right vertical inflatable portions 72L and 72R extending rearward from the left and right end regions of the out-of-hood inflatable portion 70 will cover the upper (front) surfaces 5a of the front pillars 5L and 5R at completion of airbag deployment.

At airbag inflation, an inflation gas G having flown into the airbag 60 via the inlet ports 68L and 68R will firstly flow into the primary inflatable region 81 disposed in front of the partitioning tether 74 of the horizontal inflatable portion 66, and then flow towards the left and right along the partitioning tether 74, as shown in Figs. 7 and 15. Subsequently, the gas G flows into the secondary inflatable portion 82 via the supply ports 80L and 80R disposed in a vicinity of each of left and right ends 74a and 74b of the partitioning tether 74. At this time, since the supply ports 80L and 80R are disposed only at the vicinities of the left and right ends 74a and 74b of the partitioning tether 74, the inflation gas G in the primary inflatable region 81 will flow towards the left and right along the partitioning tether 74 after reaching the partitioning tether 74, such that the primary inflatable region 81 disposed in front of the partitioning tether 74 will inflate quickly as a whole. The primary inflatable region 81 surrounds an outer circumference (front side) of the secondary inflatable region (rear end region) 82 which is disposed along the rear edge 60b of the airbag 60 as fully inflated, and includes the out-of-hood inflatable portion 70 of the horizontal inflatable portion 66 and outer peripheral regions 72a of the left and right vertical inflatable portions 72L and 72R. That is, if the primary inflatable region 81 is quickly inflated and reaches its fully inflated contour, the outer peripheral regions 72a of the vertical inflatable portions 72L and 72R extending rearward from the left and right end regions of the horizontal inflatable portion 66 will also reach their fully inflated contour quickly, such that the vertical inflatable portions 72L and 72R are deployed over the upper surfaces 5a of the front pillars 5L and 5R without oscillating in a left and right direction at vicinities of the rear ends 72d. Then the inflation gas G will flow into the secondary inflatable region 82 via the supply ports 80L and 80R and inflate the secondary inflatable region 82 into its fully inflated contour as shown in Fig. 16, and the primary inflatable region 81 as well as the secondary inflatable region 82 reach determined internal pressures, thus completing airbag deployment.

Therefore, the airbag device M of the embodiment is able to deploy the airbag 60 over the upper surfaces 5a of the front pillars 5L and 5R in a quick and adequate fashion. It is needless to say that the airbag 60 covers the upper surface of the cowl 7 as well with the out-of-hood inflatable portion 70 of the horizontal inflatable portion 66 in an adequate fashion, and thus cushion and protect a pedestrian from the cowl 7, upper surface of the lower region of the front windshield 4 and upper surfaces 5a of the front pillars 5L and 5R.

In the foregoing embodiment, in a plan view of the airbag 60 as fully inflated, the partitioning tether 74 is disposed in a curved fashion like a generally arc protruding forward.

With this configuration, if an inflation gas G reaches a vicinity of the partitioning tether 74 in an initial stage of inflow of inflation gas G into the airbag 60, the gas G will flow smoothly towards left and right along the partitioning tether 74 formed in a curved fashion like a generally arc up to vicinities of the left and right ends 74a and 74b, and inflate the whole primary inflatable region 81, which is disposed in front of the partitioning tether 74, into a fully inflated state quickly. As described above, if the primary inflatable region 81 is quickly inflated and reaches its fully inflated contour, the outer peripheral regions 72a of the vertical inflatable portions 72L and 72R extending rearward from the left and right ends of the horizontal inflatable portion 66 will also reach their fully inflated contour quickly, such that the vertical inflatable portions 72L and 72R will be deployed over the upper surfaces 5a of the front pillars 5L and 5R further quickly while being prevented from oscillating in a left and right direction at vicinities of the rear ends 72d.

In the foregoing embodiment, the partitioning tether 74 is so configured that the vicinity of the center 74c in a left and right direction is an arc with a small curvature (with a great curvature radius) or a generally straight line extending in a left and right direction. However, the partitioning tether 74 may include in the center 74c a short straight region extending in a left and right direction in a plan view of the airbag 60 as fully inflated on condition that the tether 74 has a curved shape like a generally arc protruding forward as a whole. It is yet desirable that regions towards the left and right ends 74a and 74b curve gently from the straight region with no corners with a great curvature (i.e., small curvature radius).

If such an advantageous effect does not have to be considered, the partitioning tether may be disposed in a U-shape or V-shape protruding forward, in a plan view, on condition that it is arranged along the rear edge of the airbag in such a manner as to form supply ports only at vicinities of the left and right ends.

In the foregoing embodiment, the partitioning tether 74 is disposed in such a curved fashion that the left and right end regions 74a and 74b come close to the left and right edges 60c and 60d of the airbag 60 such that flow paths of the inflation gas G in the primary inflatable region 81 narrow towards the left and right supply ports 80L and 80R.

This configuration will provide narrow regions at vicinities of the supply ports 80L and 80R in the primary inflatable region 81, where an inflation gas G will stand before flowing into the secondary inflatable region 82. Accordingly, the primary inflatable region 81 will be able to reach its fully inflated contour in a quick and steady fashion, and the left and right vertical inflatable portions 72L and 72R will be prevented from oscillating at the rear ends 72d and be deployed over the upper surfaces 5a of the front pillars 5L and 5R in a quick and steady fashion.

In the foregoing embodiment, moreover, the partitioning tether 74 is composed of two base cloths 93, i.e., the vehicle body facing cloth 93a jointed to the vehicle body facing wall 63 and the pedestrian-facing cloth 93e jointed to the pedestrian-facing wall 64, and the seam allowances 94 jointing the first ends 93c and 93g of the cloths 93a and 93e together face towards the secondary inflatable region 82.

With no seam allowances facing towards the primary inflatable region 81, this configuration will not affect the flow of an inflation gas G flowing in front of the partitioning tether 74, and help the gas G to flow towards left and right smoothly to inflate the primary inflatable region 81 up to the left and right ends smoothly.

This configuration will also facilitate an attaching work of the partitioning tether 74 to the airbag 60. That is, if the partitioning tether 74 is composed of the vehicle body facing cloth 93a and the pedestrian-facing cloth 93e, it is possible to join firstly the second ends 93b and 93f of the vehicle body facing cloth 93a and pedestrian-facing cloth 93e to the vehicle body facing wall 63 and the pedestrian-facing wall 64, and then join the first ends 93c and 93g of the vehicle body facing cloth 93a and pedestrian-facing cloth 93e together before joining the outer peripheral edges of the vehicle body facing wall 63 and the pedestrian-facing wall 64 together to form the circumferential wall 62 of the airbag 60. This way the partitioning tether 74 will be easily formed inside the airbag 60.

The airbag 60 further includes between the inlet ports 68L, 68R and the partitioning tether 74 in a central region in a left and right direction of the in-hood inflatable portion 67 the front thickness regulating section 76 that regulates the thickness of the in-hood inflatable portion 67 at airbag deployment.

The front thickness regulating section 76 will limit the thickness of the in-hood inflatable portion 67 inflatable on the underside 10h of the rear end 10c of the hood 10, thus prevent the in-hood inflatable portion 67 from getting hung up between the hood 10 and cowl 7, and enable the out-of-hood inflatable portion 70 and vertical inflatable portions 72L and 72R, which are on a lower reach of the inflation gas G relative to the in-hood inflatable portion 67, to deploy rearward smoothly.

The airbag 60 further includes on the left and right sides of the front thickness regulating section 76 peripheral thickness regulating sections 77L and 77R that regulate the thickness of the in-hood inflatable portion 67 at airbag deployment. The peripheral thickness regulating sections 77L and 77R are disposed in such a manner as to form the communication ports 84L and 84R between the front thickness regulating section 76 and the peripheral thickness regulating sections 77L and 77R and to form the communication ports 85L and 85R between each of the peripheral thickness regulating sections 77L and 77R and the circumferential wall 62 at the left and right edges 60c and 60d of the airbag 60 for letting the inflation gas G go rearward.

With this configuration, the peripheral thickness regulating sections 77L and 77R together with the front thickness regulating section 76 will limit the thickness of the in-hood inflatable portion 67 over a generally entire area in a left and right direction without blocking the flow of the inflation gas G towards the partitioning tether 74 because of the presence of the communication ports 84L, 84R, 85L and 85R. Accordingly, the in-hood inflatable portion 67 will be further prevented from getting hung up between the hood 10 and cowl 7, and the out-of-hood inflatable portion 70 and vertical inflatable portions 72L and 72R will be smoothly deployed.

Furthermore, the airbag 60 of the foregoing embodiment further includes at a vicinity of each of the intersectional regions 71 of the vertical inflatable portions 72L and 72R and out-of-hood inflatable portion 70 of the horizontal inflatable portion 66 the rear thickness regulating section 78 (78L, 78R) for regulating the thickness of the airbag 60.

The rear thickness regulating sections 78L and 78R will limit the thicknesses of the intersectional regions 71 of the vertical inflatable portions 72L and 72R and out-of-hood inflatable portion 70 at airbag deployment. That is, in the illustrated embodiment, the left and right ends 74a and 74b of the partitioning tether 74 are located proximate to the rear edge 60b of the airbag 60, which provides a wide inflatable region in front of each of the ends 74a and 74b. However, the rear thickness regulating sections 78L and 78R will prevent those regions from inflating too thick. Therefore, the vertical inflatable portions 72L and 72R will be deployed over the upper surfaces 5a of the front pillars 5L and 5R with an as uniform thickness as possible from vicinities of the front ends 72c to the rear ends 72d, and cushion a pedestrian adequately with an extensive plane surface.

In the airbag 60 of the illustrated embodiment, the front thickness regulating section 76 and peripheral thickness regulating sections 77 are formed by sewing the vehicle body facing wall 63 and pedestrian-facing wall 64 together directly. However, the front thickness regulating section 76 and peripheral thickness regulating sections 77 may also be formed by jointing the vehicle body facing wall 63 and pedestrian-facing wall 64 with a band-shaped tether. Although the rear thickness regulating sections 78 are formed by band-shaped tethers, the rear thickness regulating section 78 may be composed of a seam that sews the vehicle body facing wall 63 and pedestrian-facing wall 64 together directly.

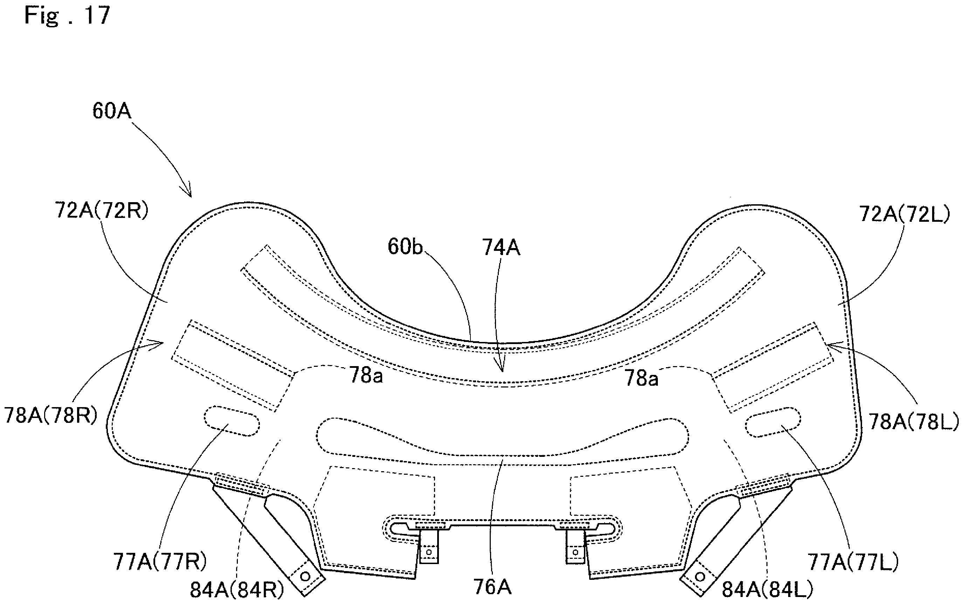

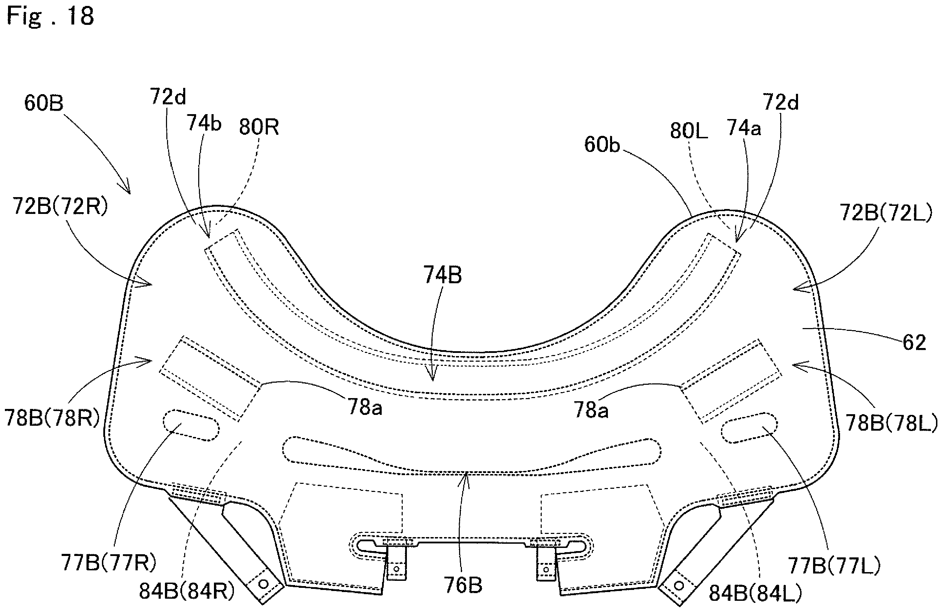

In the airbag 60 of the illustrated embodiment, each of the rear thickness regulating sections 78 is located at a slightly outer position in a left and right direction relative to a rear region of the communication port 84 formed between the front thickness regulating section 76 and peripheral thickness regulating section 77. However, as in airbags 60A and 60B shown in Figs. 17 and 18, each of the rear thickness regulating sections 78A and 78B may be so disposed that its end 78a facing toward the center is located at the rear of the communication port 84A/84B between the front thickness regulating section 76A/76B and peripheral thickness regulating section 77A/77B, such that the rear thickness regulating section 78A/78B covers a half area of an opening width of the communication port 84A/84B.

Furthermore, the partitioning tether may be disposed in proximity to the rear edge 60b of the airbag 60A, like a partitioning tether 74A shown in Fig. 17.

The partitioning tether may also be configured to curve more sharply such that the ends 74a and 74b face further rearward, like a partitioning tether 74B shown in Fig. 18. This configuration will provide supply ports 80L and 80R with a small opening area between the ends 74a and 74b and the circumferential wall 62 at the rear edge 60b since the ends 74a and 74b are in proximity to the rear ends 72d of the vertical inflatable portions 72B. Such communication ports 80L and 80R will further contract the flow paths of inflation gas.

In the illustrated embodiment, the supply ports 80 are disposed between the ends 74a and 74b of the partitioning tether 74 and the circumferential wall 62. However, if the ends 74a and 74b of the partitioning tether 74 are located in proximity to the circumferential wall 62, an opening may be formed in each of the ends 74a and 74b of the partitioning tether 74 to serve as a communication port 80 for feeding an inflation gas to the secondary inflatable region 82 from the primary inflatable region 81.

In the illustrated embodiment, furthermore, the airbag device M has been so described as is mounted on the mounting seat 11 on the underside 10h of the rear end 10c of the vehicle hood 10. However, the airbag device M may also be mounted on a vehicle body structure other than the hood 10.

Although the pedestrian protection airbag device M of the illustrated embodiment is designed to cooperate with the hood lifting devices 20, the hood lifting devices 20 do not necessarily have to be used if the rear end 10c of the hood 10 is pushed up or the like by the airbag at airbag deployment and forms a clearance between the rear end 10c of the hood 10 and cowl 7 via which the airbag emerges for deployment over the upper surfaces 5a of the front pillars 5L and 5R.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A pedestrian protection airbag device (M) adapted to be mounted on a vehicle (V), the airbag device including a housing (28) and an airbag (60, 60A, 60B) which is stored in the housing in a folded-up configuration and inflatable with an inflation gas (G) and deployable towards the rear, left and right via a clearance formed between a rear end (10c) of a hood (10) and a cowl (7) of the vehicle for covering the cowl and left and right front pillars (5, 5L, 5R) of the vehicle; the airbag (60, 60A, 60B) includes a horizontal inflatable portion (66) that is deployable in such a manner as to extend in a left and right direction to cover an upper surface of the cowl (7) and left and right vertical inflatable portions (72, 72A, 72B, 72L, 72R) that are deployable in such a manner as to extend rearward from vicinities of left and right ends of the horizontal inflatable portion to cover upper surfaces (5a) of the front pillars (5, 5L, 5R);
a circumferential wall (62) of the airbag (60, 60A, 60B) is composed of a vehicle body facing wall (63) deployable on a lower side and a pedestrian-facing wall (64) deployable on an upper side, the vehicle body facing wall and pedestrian-facing wall being continuous at outer peripheral edges thereof;
the horizontal inflatable portion (66) includes:
an in-hood inflatable portion (67) that includes an inlet port (68, 68L, 68R) for letting in an inflation gas and is deployable beneath the rear end (10c) of the hood (10); and
an out-of-hood inflatable portion (70) that is deployable in such a manner as to protrude rearward out of the rear end of the hood and is in gas communication with the vertical inflatable portions (72L, 72R) at vicinities of left and right ends (70c, 70d) of the out-of-hood inflatable portion (70);
the airbag (60, 60A, 60B) further includes a band-shaped partitioning tether (74, 74A, 74B) that is jointed to the vehicle body facing wall (63) and pedestrian-facing wall (64) by upper and lower edges of the partitioning tether (74, 74A, 74B) and partitions an inflatable region of the airbag (60, 60A, 60B) as fully inflated ranging from the out-of-hood inflatable portion (70) to the left and right vertical inflatable portions (72L, 72R) into a rear end region (82) and a front region (81a), the rear end region (82) being shaped along a rear edge (60b) of the airbag;
the front region (81a) and an inflatable region of the airbag disposed in front of the front region (81a) serve as a primary inflatable region (81) and the rear end region (82) serves as a secondary inflatable region (82) that admits the inflation gas (G) from the primary inflatable region and starts inflation after the primary inflatable region (81) starts inflation, **characterized in that**; the partitioning tether (74, 74A, 74B) is so disposed as to form supply ports (80, 80L, 80R) via which the secondary inflatable region (82) admits the inflation gas (G) from the primary inflatable region (81) only at vicinities of left and right ends (74a, 74b) of the partitioning tether (74, 74A, 74B).

2. The pedestrian protection airbag device (M) of claim 1, wherein the partitioning tether (74, 74A, 74B) is disposed in a curved fashion like a generally arc protruding forward in a plan view of the airbag (60, 60A, 60B) as fully inflated.

3. The pedestrian protection airbag device (M) of claim 1 or claim 2, wherein flow paths of the inflation gas (G) in the primary inflatable region (81) narrow towards the left and right supply ports (80, 80L, 80R).

4. The pedestrian protection airbag device (M) of any one of claim 1 to claim 3, wherein:
the partitioning tether (74, 74A, 74B) is composed of two base cloths (93), i.e., a vehicle body facing cloth (93a) jointed to the vehicle body facing wall (63) and a pedestrian-facing cloth (93e) jointed to the pedestrian-facing wall (64); and
seam allowances (94) that joints ends (93c, 93g) of the vehicle body facing cloth (93a) and the pedestrian-facing cloth (93e) together face towards the secondary inflatable region (82).

5. The pedestrian protection airbag device (M) of any one of claim 1 to claim 4, wherein the airbag (60, 60A, 60B) further includes between the inlet port (68, 68L, 68R) and the partitioning tether (74, 74A, 74B) in a central region in a left and right direction of the in-hood inflatable portion (67) a front thickness regulating section (76, 76A, 76B) that regulates a thickness of the in-hood inflatable portion (67) at airbag deployment.

6. The pedestrian protection airbag device (M) of claim 5, wherein:
the airbag (60, 60A, 60B) further includes on each of the left and right sides of the front thickness regulating section (76, 76A, 76B) a peripheral thickness regulating section (77, 77A, 77B, 77L, 77R) that regulates the thickness of the in-hood inflatable portion (67) at airbag deployment; and
the peripheral thickness regulating sections (77, 77A, 77B, 77L, 77R) are disposed in such a manner as to form communication ports (84, 85) between the front thickness regulating section (76, 76A, 76B) and the peripheral thickness regulating sections and between each of the peripheral thickness regulating sections and the circumferential wall (62) at left and right edges (60c, 60d) of the airbag for letting the inflation gas (G) go rearward.

7. The pedestrian protection airbag device (M) of any one of claim 1 to claim 6, wherein the airbag (60, 60A, 60B) further includes at a vicinity of each of intersectional regions (71) of the vertical inflatable portions (72L, 72R) and the out-of-hood inflatable portion (70) of the horizontal inflatable portion (66) a rear thickness regulating section (78, 78A, 78B, 78L, 78R) that regulates a thickness of the airbag.

## Patentansprüche

1. Fußgängerschutzairbagvorrichtung (M), die zur Montage an einem Fahrzeug (V) angepasst ist, wobei die Airbagvorrichtung ein Gehäuse (28) und einen Airbag (60, 60A, 60B) umfasst, der in dem Gehäuse in einer gefalteten Konfiguration aufgenommen ist und mit einem Aufblasgas (G) aufgeblasen werden kann und sich mittels eines Zwischenraums, der zwischen einem hinteren Ende (10c) einer Motorhaube (10) und einer Stirnwand (7) des Fahrzeugs ausgebildet ist, zum Abdecken der Stirnwand und der linken und rechten Frontsäule (5, 5L, 5R) des Fahrzeugs nach hinten, links und rechts entfalten kann, wobei
der Airbag (60, 60A, 60B) einen horizontalen aufblasbaren Abschnitt (66), der so entfaltet werden kann, dass er sich in der Links- und Rechts-Richtung zum Bedecken einer oberen Oberfläche der Stirnwand (7) erstreckt, und linke und rechte vertikale aufblasbare Abschnitte (72, 72A, 72B, 72L, 72R) umfasst, die derart entfaltet werden können, dass sie sich von der Umgebung von linken und rechten Enden des horizontalen aufblasbaren Abschnitts erstrecken, wodurch sie obere Oberflächen (5a) der Frontsäulen (5, 5L, 5R) bedecken;
eine Umfangswand (62) des Airbags (60, 60A, 60B) aus einer auf die Fahrzeugkarosserie gerichteten Wand (63), die auf einer unteren Seite entfaltet werden kann, und einer auf einen Fußgänger gerichteten Wand (64), die auf einer oberen Seite entfaltet werden kann, zusammengesetzt ist, wobei die auf die Fahrzeugkarosserie gerichtete Wand und die auf einen Fußgänger gerichtete Wand an Außenumfangskanten davon kontinuierlich sind;
wobei der horizontale aufblasbare Abschnitt (66) umfasst:
einen innerhalb der Motorhaube aufblasbaren Abschnitt (67), der eine Einlassöffnung (68, 68L, 68R) zum Einlassen eines Aufblasgases umfasst und unterhalb des hinteren Endes (10c) der Motorhaube (10) entfaltet werden kann; und
einen außerhalb der Motorhaube aufblasbaren Abschnitt (70), der derart entfaltet werden kann, dass er nach hinten aus dem hinteren Ende der Motorhaube vorragt und mit den vertikal aufblasbaren Abschnitten (72L, 72R) in der Umgebung von linken und rechten Enden (70c, 70d) des außerhalb der Motorhaube aufblasbaren Abschnitts (70) in einer Gasverbindung steht;
wobei der Airbag (60, 60A, 60B) ferner einen bandförmigen Trenngurt (74, 74A, 74B) umfasst, der mit der auf die Fahrzeugkarosserie gerichteten Wand (63) und auf einen Fußgänger gerichteten Wand (64) durch obere und untere Kanten des Trenngurts (74, 74A, 74B) verbunden ist und einen aufblasbaren Bereich des voll aufgeblasenen Airbags (60, 60A, 60B) von dem außerhalb der Motorhaube aufblasbaren Abschnitt (70) zu den linken und rechten vertikalen aufblasbaren Abschnitten (72L, 72R) in einen hinteren Endbereich (82) und einen vorderen Bereich (81a) aufteilt, wobei der hintere Endbereich (82) entlang einer hinteren Kante (60b) des Airbags geformt ist;
wobei der vordere Bereich (81a) und ein aufblasbarer Bereich des Airbags, der vor dem vorderen Bereich (81a) angeordnet ist, als primärer aufblasbarer Bereich (81) dienen, und der hintere Endbereich (82) als sekundärer aufblasbarer Bereich (82) dient, der das Aufblasgas (G) von dem primären aufblasbaren Bereich einlässt und mit dem Aufblasen beginnt, nachdem der primäre aufblasbare Bereich (81) mit dem Aufblasen begonnen hat, **dadurch gekennzeichnet, dass** der Trenngurt (74, 74A, 74B) so angeordnet ist, dass er Zuführungsöffnungen (80, 80L, 80R) bildet, durch die der sekundäre aufblasbare Bereich (82) das Aufblasgas (G) von dem primären aufblasbaren Bereich (81) nur an der Umgebung der linken und rechten Enden (74a, 74b) des Trenngurts (74, 74A, 74B) einlässt.

2. Fußgängerschutzairbagvorrichtung (M) nach Anspruch 1, bei welcher der Trenngurt (74, 74A, 74B) in einer gekrümmten Weise wie ein allgemeiner Bogen angeordnet ist, der in einer Draufsicht des voll aufgeblasenen Airbags (60, 60A, 60B) nach vorne vorragt.

3. Fußgängerschutzairbagvorrichtung (M) nach Anspruch 1 oder Anspruch 2, bei der Strömungswege des Aufblasgases (G) in dem primären aufblasbaren Bereich (81) in die Richtung der linken und rechten Zuführungsöffnungen (80, 80L, 80R) schmaler werden.

4. Fußgängerschutzairbagvorrichtung (M) nach einem von Anspruch 1 bis Anspruch 3, bei welcher:
der Trenngurt (74, 74A, 74B) aus zwei Basisgeweben (93) zusammengesetzt ist, d.h., einem auf die Fahrzeugkarosserie gerichteten Gewebe (93a), das an der auf die Fahrzeugkarosserie gerichteten Wand (63) angebracht ist, und einem auf einen Fußgänger gerichteten Gewebe (93e), das an der auf einen Fußgänger gerichteten Wand (64) angebracht ist; und
Nahtzugaben (94), die Enden (93c, 93g) des auf die Fahrzeugkarosserie gerichteten Gewebes (93a) und des auf einen Fußgänger gerichteten Gewebes (93e) miteinander verbinden, auf den sekundären aufblasbaren Bereich (82) gerichtet sind.

5. Fußgängerschutzairbagvorrichtung (M) nach einem von Anspruch 1 bis Anspruch 4, bei welcher der Airbag (60, 60A, 60B) zwischen der Einlassöffnung (68, 68L, 68R) und dem Trenngurt (74, 74A, 74B) in einem zentralen Bereich in einer Links- und Rechts-Richtung des innerhalb der Motorhaube aufblasbaren Abschnitts (67) ferner einen vorderen Dickenregulierabschnitt (76, 76A, 76B) umfasst, der die Dicke des innerhalb der Motorhaube aufblasbaren Abschnitts (67) bei der Airbagentfaltung reguliert.

6. Fußgängerschutzairbagvorrichtung (M) nach Anspruch 5, bei welcher der Airbag (60, 60A, 60B) ferner auf jeder der linken und der rechten Seite des vorderen Dickenregulierabschnitts (76, 76A, 76B) einen Umfangsdickenregulierabschnitt (77, 77A, 77B, 77L, 77R) umfasst, der die Dicke des innerhalb der Motorhaube aufblasbaren Abschnitts (67) bei der Airbagentfaltung reguliert; und
die Umfangsdickenregulierabschnitte (77, 77A, 77B, 77L, 77R) derart angeordnet sind, dass sie Verbindungsöffnungen (84, 85) zwischen dem vorderen Dickenregulierabschnitt (76, 76A, 76B) und den Umfangsdickenregulierabschnitten und zwischen jedem der Umfangsdickenregulierabschnitte und der Umfangswand (62) an linken und rechten Kanten (60c, 60d) des Airbags bilden, die zum Strömenlassen des Aufblasgases (G) nach hinten dienen.

7. Fußgängerschutzairbagvorrichtung (M) nach einem von Anspruch 1 bis Anspruch 6, bei welcher der Airbag (60, 60A, 60B) in der Umgebung von jedem von Schnittbereichen (71) der vertikal aufblasbaren Abschnitte (72L, 72R) und dem außerhalb der Motorhaube aufblasbaren Abschnitt (70) des horizontal aufblasbaren Abschnitts (66) ferner einen hinteren Dickenregulierabschnitt (78, 78A, 78B, 78L, 78R) umfasst, der die Dicke des Airbags reguliert.

## Revendications

1. Dispositif de coussin gonflable de protection pour piéton (M) adapté pour être monté sur un véhicule (V), le dispositif de coussin gonflable comportant un logement (28) et un coussin gonflable (60, 60A, 60B) qui est stocké dans le logement dans une configuration pliée et gonflable avec un gaz de gonflage (G) et déployable vers l'arrière, la gauche et la droite via un débattement formé entre une extrémité arrière (10c) d'un capot (10) et un auvent (7) du véhicule pour couvrir l'auvent et des montants avant gauche et droit (5, 5L, 5R) du véhicule ;
le coussin gonflable (60, 60A, 60B) comporte une portion gonflable horizontale (66) qui est déployable de manière à s'étendre dans une direction gauche et droite pour couvrir une surface supérieure de l'auvent (7) et des portions gonflables verticales gauche et droite (72, 72A, 72B, 72L, 72R) qui sont déployables de manière à s'étendre vers l'arrière depuis des environs d'extrémités gauche et droite de la portion gonflable horizontale pour couvrir des surfaces supérieures (5a) des montants avant (5, 5L, 5R) ;
une paroi circonférentielle (62) du coussin gonflable (60, 60A, 60B) est composée d'une paroi faisant face à la carrosserie du véhicule (63) déployable sur un côté inférieur et d'une paroi faisant face au piéton (64) déployable sur un côté supérieur, la paroi faisant face à la carrosserie du véhicule et la paroi faisant face au piéton étant continues au niveau de bords périphériques de celles-ci ;
la portion gonflable horizontale (66) comporte :
une portion gonflable dans le capot (67) qui comporte un orifice d'entrée (68, 68L, 68R) pour laisser entrer un gaz de gonflage et est déployable sous l'extrémité arrière (10c) du capot (10) ; et
une portion gonflable hors du capot (70) qui est déployable de manière à faire saillie vers l'arrière hors de l'extrémité arrière du capot et est en communication gazeuse avec les portions gonflables verticales (72L, 72R) à des environs d'extrémités gauche et droite (70c, 70d) de la portion gonflable hors du capot (70) ;
le coussin gonflable (60, 60A, 60B) comporte en outre une longe de séparation en forme de bande (74, 74A, 74B) qui est assemblée à la paroi faisant face à la carrosserie du véhicule (63) et à la paroi faisant face au piéton (64) par des bords supérieur et inférieur de la longe de séparation (74, 74A, 74B) et sépare une région gonflable du coussin gonflable (60, 60A, 60B) totalement gonflé allant de la portion gonflable hors du capot (70) aux portions gonflables verticales gauche et droite (72L, 72R) dans une région d'extrémité arrière (82) et une région avant (81a), la région d'extrémité arrière (82) étant conformée le long d'un bord arrière (60b) du coussin gonflable ;
la région avant (81a) et une région gonflable du coussin gonflable disposée à l'avant de la région avant (81a) servent de région gonflable primaire (81) et la région d'extrémité arrière (82) sert de région gonflable secondaire (82) qui admet le gaz de gonflage (G) depuis la région gonflable primaire et commence le gonflage après que la région gonflable primaire (81) commence le gonflage, **caractérisé en ce que** ;
la longe de séparation (74, 74A, 74B) est disposée de façon à former des orifices d'alimentation (80, 80L, 80R) via lesquels la région gonflable secondaire (82) admet le gaz de gonflage (G) depuis la région gonflable primaire (81) uniquement à des environs d'extrémités gauche et droite (74a, 74b) de la longe de séparation (74, 74A, 74B).

2. Dispositif de coussin gonflable de protection pour piéton (M) selon la revendication 1, dans lequel la longe de séparation (74, 74A, 74B) est disposée de façon incurvée comme un arc faisant généralement saillie vers l'avant dans une vue en plan du coussin gonflable (60, 60A, 60B) totalement gonflé.

3. Dispositif de coussin gonflable de protection pour piéton (M) selon la revendication 1 ou la revendication 2, dans lequel des trajets d'écoulement du gaz de gonflage (G) dans la région gonflable primaire (81) rétrécissent vers les orifices d'alimentation gauche et droit (80, 80L, 80R).

4. Dispositif de coussin gonflable de protection pour piéton (M) selon l'une quelconque de la revendication 1 à la revendication 3, dans lequel :
la longe de séparation (74, 74A, 74B) est composée de deux tissus de base (93), c'est-à-dire, un tissu faisant face à la carrosserie de véhicule (93a) assemblé à la paroi faisant face à la carrosserie du véhicule (63) et un tissu faisant face au piéton (93e) assemblé à la paroi faisant face au piéton (64) ; et
des réserves pour couture (94) qui assemblent des extrémités (93c, 93g) du tissu faisant face à la carrosserie du véhicule (93a) et du tissu faisant face au piéton (93e) font face vers la région gonflable secondaire (82).

5. Dispositif de coussin gonflable de protection pour piéton (M) selon l'une quelconque de la revendication 1 à la revendication 4, dans lequel le coussin gonflable (60, 60A, 60B) comporte en outre, entre l'orifice d'entrée (68, 68L, 68R) et la longe de séparation (74, 74A, 74B) dans une région centrale dans une direction gauche et droite de la portion gonflable dans le capot (67), une section de régulation d'épaisseur avant (76, 76A, 76B) qui régule une épaisseur de la portion gonflable dans le capot (67) lors du déploiement du coussin gonflable.

6. Dispositif de coussin gonflable de protection pour piéton (M) selon la revendication 5, dans lequel :
le coussin gonflable (60, 60A, 60B) comporte en outre sur chacun des côtés gauche et droit de la section de régulation d'épaisseur avant (76, 76A, 76B) une section de régulation d'épaisseur périphérique (77, 77A, 77B, 77L, 77R) qui régule l'épaisseur de la portion gonflable dans le capot (67) lors du déploiement du coussin gonflable ; et
les sections de régulation d'épaisseur périphériques (77, 77A, 77B, 77L, 77R) sont disposées de manière à former des orifices de communication (84, 85) entre la section de régulation d'épaisseur avant (76, 76A, 76B) et les sections de régulation d'épaisseur périphériques et entre chacune des sections de régulation d'épaisseur périphériques et la paroi circonférentielle (62) au niveau des bords gauche et droit (60c, 60d) du coussin gonflable pour laisser le gaz de gonflage (G) aller vers l'arrière.

7. Dispositif de coussin gonflable de protection pour piéton (M) selon l'une quelconque de la revendication 1 à la revendication 6, dans lequel le coussin gonflable (60, 60A, 60B) comporte en outre, à proximité de chacune des régions d'intersection (71) des portions gonflables verticales (72L, 72R) et de la portion gonflable hors du capot (70) de la portion gonflable horizontale (66), une section de régulation d'épaisseur arrière (78, 78A, 78B, 78L, 78R) qui régule une épaisseur du coussin gonflable.
